# EUROPEAN PATENT SPECIFICATION

(11) **EP 4 454 343 B1**
(45) Date of publication and mention of the grant of the patent: **10.06.2026**
(21) Application number: 21840710.4
(22) Date of filing: 20.12.2021
(51) Int. Cl.: H04W 28/02, H04W 28/082, H04W 28/08, H04W 88/02

(54) **METHOD AND APPARATUS FOR THREE CELL GROUP MULTI-CONNECTIVITY USING TWO UPLINK DATA SPLIT THRESHOLDS**
VERFAHREN UND VORRICHTUNG FÜR DREI-ZELLEN-GRUPPEN-MULTIKONNEKTIVITÄT UNTER VERWENDUNG VON ZWEI UPLINK-DATENTEILUNGSSCHWELLEN
PROCÉDÉ ET APPAREIL POUR CONNECTIVITÉ MULTIPLE À TROIS GROUPES DE CELLULES UTILISANT DEUX SEUILS DE SÉPARATION DE DONNÉES DE LIAISON MONTANTE

(43) Date of publication of application: 30.10.2024
(73) Proprietor: Telefonaktiebolaget LM Ericsson (publ), 164 83 Stockholm (SE)
(72) Inventor: ERICSON, Mårten, 954 33 Gammelstad (SE); RUGELAND, Patrik, 167 75 Bromma (SE); MILDH, Gunnar, 192 55 Sollentuna (SE); WAGER, Stefan, 02360 Espoo (FI)
(74) Representative: Ericsson
(86) International application number: PCT/SE2021/051292
(87) International publication number: WO 2023/121520

(56) References cited:
- WO-A1-2021/026890
- ERICSSON: "UL Split in Dual Connectivity", vol. RAN WG2, no. Spokane, USA; 20170403 - 20170407, 3 April 2017 (2017-04-03), pages 1 - 4, XP051244737, Retrieved from the Internet <URL:http://www.3gpp.org/ftp/Meetings_3GPP_SYNC/RAN2/Docs/> [retrieved on 20170403]
- LENOVO ET AL: "Pre-processing for UL split bearer operation", vol. RAN WG2, no. Qingdao, P.R. China; 20170627 - 20170629, 16 June 2017 (2017-06-16), pages 1 - 4, XP051306651, Retrieved from the Internet <URL:http://www.3gpp.org/ftp/tsg_ran/WG2_RL2/TSGR2_AHs/2017_06_NR/Docs/> [retrieved on 20170616]
- "3rd Generation Partnership Project; Technical Specification Group Radio Access Network; NR; Packet Data Convergence Protocol (PDCP) specification (Release 16)", vol. RAN WG2, no. V16.5.0, 28 September 2021 (2021-09-28), pages 1 - 40, XP052056881, Retrieved from the Internet <URL:https://ftp.3gpp.org/Specs/archive/38_series/38.323/38323-g50.zip 38323-g50.docx> [retrieved on 20210928]

## Description

### TECHNICAL FIELD

The present disclosure relates generally to communications, and more particularly to a method performed in a wireless communication device and a wireless communication device.

### BACKGROUND

### Dual Connectivity

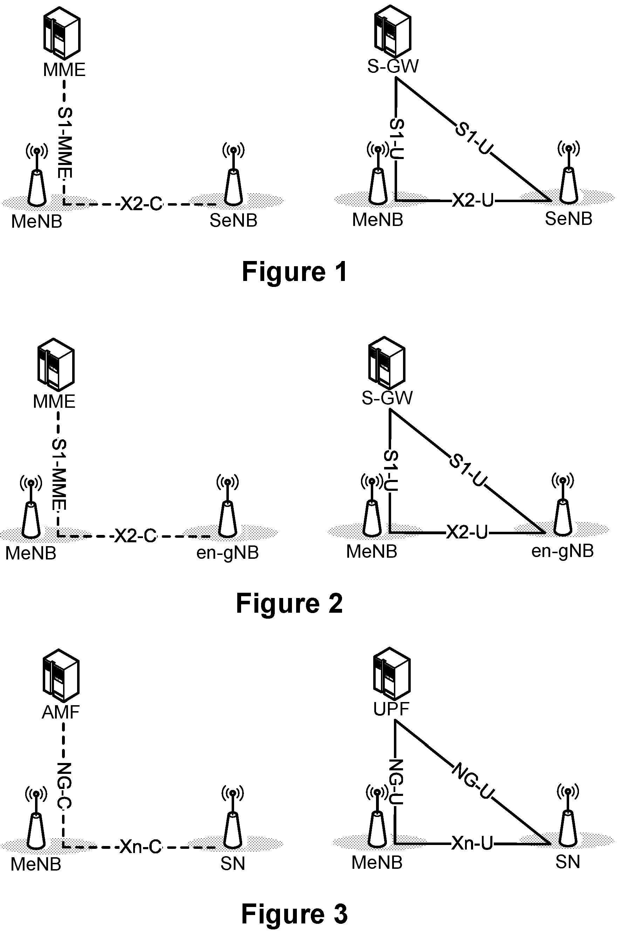

In the 3rd Generation Partnership Project (3GPP) Technical Standard (TS) 36.300 V16.5.0, dual connectivity is defined for intra-E-UTRA (intra-evolved-universal terrestrial radio access) Dual Connectivity (DC) as depicted in Figure 1, which highlights the control plane (C-plane) and user plane (U-Plane) connectivity. Both the master node (MeNB) and secondary node (SeNB) are E-UTRA nodes, with an Evolved Packet Core (EPC) Core Network (CN) entity. In Figure 1, the MeNB communicates with the mobile management entity (MME) via the S1-MME interface and with the SeNB via the X2-C interface in the control plane. Similarly, in the user plane, the MeNB communicates with the serving gateway (S-GW) via the S1-U interface and with the SeNB via the X2-U interface.

In 3GPP TS 37.340, V16.5.0, dual connectivity is further defined for Multi-Radio Dual Connectivity (MR-DC), which implies in having a User Equipment (UE) configured with two different nodes - one providing E-UTRA access and the other one providing New Radio (NR) access. The CN entity associated to MR-DC can be either EPC or 5G Core (5GC), which divides MR-DC cases as follows:
- E-UTRA-NR Dual Connectivity (EN-DC), comprised in Evolved Packet System (EPS), as a Master Node (MN) eNB and an en-gNB as a Secondary node (SN) (en-gNB refers to a gNB that is operating in a non-standalone mode operating as the SN);
- NG-RAN E-UTRA-NR Dual Connectivity (NGEN-DC), comprised in 5G System (5GS), as a MN ng-eNB (ng-eNB refers to E-UTRA eNB connected to 5GC) and a gNB as the SN;
- NR-E-UTRA Dual Connectivity (NE-DC), comprised in 5GS, as a MN gNB and an ng-eNB as the SN;
- NR-NR Dual Connectivity (NR-DC), comprised in 5GS, as MN and SN gNBs

A gNB or ng-eNB are collectively referred to as NG-RAN node.

C-plane and U-Plane connectivity for EN-DC is illustrated in Figure 2. In Figure 2, S1-MME (S1-mobility management entity) and X2-C are C-plane interfaces and S1-U and X2-U are U-plane interfaces.

C-plane and U-Plane connectivity for MR-DC with 5GC is illustrated in Figure 3. In Figure 3, NG-C and Xn-C are C-plane interfaces and NG-U and Xn-U are U-plane interfaces.

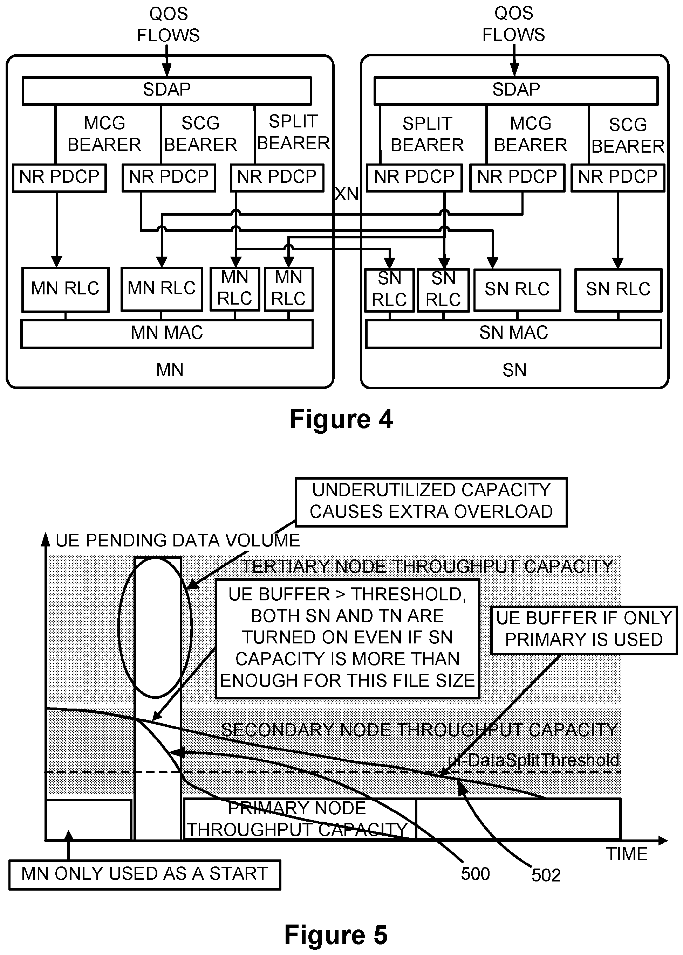

The data radio bearers (DRBs) can be terminated in either the MN or the SN, i.e. in which logical node the Packet Data Convergence Protocol (PDCP) entity is located. In either case, each bearer can either be transmitted via an MN Radio Link Control (RLC) in the Master Cell Group (MCG); and SN RLC in the Secondary Cell Group (SCG) or via both an MN and an SN RLC using a split bearer as can be seen in Figure 4. In Figure 4, quality of service (QoS) flows are received via the service data adaptation protocol (SDAP) sublayer.

### Primary path and UL threshold

In dual connectivity, even if a user equipment (UE) is configured with a split bearer, it may not always be beneficial to always split the data between the paths. For instance, if the amount of data is very small, one of the paths can easily accommodate the entire load and by the time the second path has been established, the data transfer has already finished.

To avoid unnecessary establishment of dual connectivity due to small data, an uplink data split threshold (*ul-DataSplitThreshold*) has been introduced, where if the data is below the threshold, the UE only uses the primary path, whereas if the data exceeds the threshold, it may use whichever path, e.g. utilizing round-robin or any other path-prioritization methods.

Once the remaining data level drops below the uplink data split threshold, the UE reverts back to only using the primary path.

The relevant fields in the PDCP-Config information element (from 3GPP TS 38.331 V 16.3.1) is provided below:

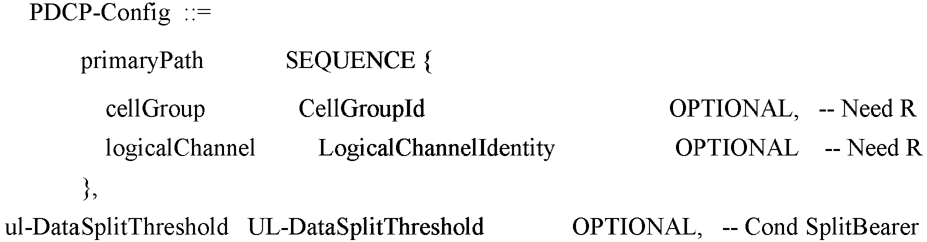

| ***PDCP-Config* field descriptions** |
|---|
| ***ul-DataSplitThreshold*** |
| Parameter specified in TS 38.323 [5]. Value *b0* corresponds to 0 bytes, value *b100* corresponds to 100 bytes, value *b200* corresponds to 200 bytes, and so on. The network sets this field to *infinity* for UEs not supporting *splitDRB-withUL-Both-MCG-SCG.* If the field is absent when the split bearer is configured for the radio bearer first time, then the default value *infinity* is applied. |

The below text is reproduced from chapter 5.2 of 3GPP 38.323 V16.3.0 where the double underlined text utilizes the *ul-DataSplitThreshold*:

### 5.2 Data transfer

### 5.2.1 Transmit operation

At reception of a PDCP SDU (service data unit) from upper layers, the transmitting PDCP entity shall:
- start the *discardTimer* associated with this PDCP SDU (if configured).

For a PDCP SDU received from upper layers, the transmitting PDCP entity shall:
- associate the COUNT value corresponding to TX_NEXT to this PDCP SDU;

NOTE 1: Associating more than half of the PDCP SN space of contiguous PDCP SDUs with PDCP SNs, when e.g., the PDCP SDUs are discarded or transmitted without acknowledgement, may cause HFN (hyper frame number) desynchronization problem. How to prevent HFN desynchronization problem is left up to UE implementation.
- perform header compression of the PDCP SDU using ROHC (robust header compression) as specified in the clause 5.7.4 and/or using EHC (ethernet header compression) as specified in the clause 5.12.4;
- perform integrity protection, and ciphering using the TX_NEXT as specified in the clause 5.9 and 5.8, respectively;
- set the PDCP SN of the PDCP Data PDU to TX_NEXT modulo 2^{[*pdcp-SN-SizeUL*]};
- increment TX_NEXT by one;
- submit the resulting PDCP Data PDU to lower layer as specified below.

When submitting a PDCP PDU to lower layer, the transmitting PDCP entity shall:
- if the transmitting PDCP entity is associated with one RLC entity:
   - submit the PDCP PDU to the associated RLC entity;
- else, if the transmitting PDCP entity is associated with at least two RLC entities:
   - if the PDCP duplication is activated for the RB:
      - if the PDCP PDU is a PDCP Data PDU:
         - duplicate the PDCP Data PDU and submit the PDCP Data PDU to the associated RLC entities activated for PDCP duplication;
      - else:
         - submit the PDCP Control PDU to the primary RLC entity;
   - else (i.e. the PDCP duplication is deactivated for the RB):
      - if the split secondary RLC entity is configured; and
      - if the total amount of PDCP data volume and RLC data volume pending for initial transmission (as specified in TS 38.322 [5]) in the primary RLC entity and the split secondary RLC entity is equal to or larger than *ul-DataSplitThreshold*:
         - submit the PDCP PDU to either the primary RLC entity or the split secondary RLC entity;
      <...>
- else:
- submit the PDCP PDU to the primary RLC entity.

### Triple/multi connectivity

In NR Rel-15, two separate frequency ranges were introduced: FR1: <7.125 GHz and FR2: 24.250-52.65 GHz.

In 3GPP TR 38.380 (v16.0.0) it is discussed the potential to introduce a new frequency range between 7-24 GHz, preliminary known as FR2. In addition, it is considered for 6G to introduce sub-THZ (<300 GHz), THz (300 GHz - 2 GHz) as well as visual light communication (400-800 THz) and optical wireless communication (OWC) (100 THz - 1000 THz). Even though the entire ranges will not be address simultaneously, even if only one of them is used, it is likely this would have to be handled by a separate physical layer compared to FR1 or FR2. Thus it is likely that some devices may implement simultaneous connectivity to at least three different frequency ranges at once, i.e. using triple or multi-connectivity (>3 paths).

The document WO 2021/026890 A1 (APPLE INC [US]; XU FANGLI [CN]) 18 February 2021 (2021-02-18) discloses a UE that enters a dual connectivity mode with a cellular network.

### SUMMARY

The invention is set out in the appended claims.

In dual connectivity, a UE can be configured with a split bearer to either increase the available bandwidth by utilizing radio resources from multiple base stations or provide reliability through redundancy by transmitting duplicate data packets via both paths.

In uplink, if the UE only has a small amount of data to transmit, it will not be beneficial from throughput perspective to activate both links to access the full bandwidth as one of the paths is fully capable of providing the required resources. Therefore, the UE can be configured with a threshold *ul-SplitDataThreshold* to determine when to use one or both paths in uplink. If the UL data buffer is below the threshold, the UE will only use the configured primary path and only if the data buffer exceeds the threshold will it be able to select one of the paths using an appropriate path selection algorithm (e.g. round-robin, i.e. alternating between the two paths).

A logical extension of dual connectivity would be to introduce triple connectivity, or even >3 cell group multi-connectivity. If this would imply that a UE could be configured with a bearer split between three paths, the UE would need to be able to determine which of the paths it should use for uplink transmission. Using the current *ul-SplitDataThreshold* parameter means that the UE can either use one (primary) path or all paths and it is not possible to select different variants. Using too many unnecessary paths (without any clear benefit for the UE performance) causes an extra overhead in the UL since the UE may not have sufficient data in buffer to fully utilize received grants on all paths, and would have to transmit padding on some of the paths. In addition, the UE would have to split transmission power between the paths and the extra resources needed to transmit to a node that is worse than the primary node.

Another problem is when to turn off the different paths. With current solutions, the UE can only turn off all paths except the primary.

Thus, problems that occur are:
1) UEs will start using unnecessary paths with additional overhead in the UL
2) Similar, it is difficult to turn off paths in an efficient way.

Certain aspects of the disclosure and their embodiments may provide solutions to these or other challenges. According to some embodiments, a method performed in in a wireless user equipment, UE, having a data buffer and connected to three network nodes in radio communication system includes connecting to three different cell groups where the UE is configured to use a primary transmission path in a first cell group of the three different cell groups, a secondary transmission path in a second cell group of the three different cell groups, and a tertiary transmission path in a third cell group of the three different cell groups. The method includes receiving a configuration having a first data split threshold value and a second data split threshold value for modifying a data transmission path. The method includes transmitting data via only the primary transmission path, via only the primary transmission path and the secondary transmission path and via the primary transmission path, the secondary transmission path, and the tertiary transmission path based on the first data split threshold value and the second data split threshold value.

Analogous user equipments, computer program, and computer program products are provided.

Certain embodiments may provide one or more of the following technical advantage(s). Advantages that may be achieved is: 1)by configuring the UE with multiple data buffer thresholds, it will be possible to configure the UE to only use a subset of the bandwidth available; and 2) by proper configuration of the thresholds, that can be applied by the network based on knowledge of the UE or radio conditions or network load e.g. it is possible to activate all carriers even at low buffer levels or load for some UEs.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
Figure 1 is an illustration of C-Plane and U-Plane connectivity of eNBs involved in Dual Connectivity;
Figure 2 is an illustration of C-Plane and U-Plane connectivity of EN-DC;
Figure 3 is an illustration of C-Plane and U-Plane connectivity of MR-DC with 5GC
Figure 4 is an illustration of network side protocol termination options for MCG, SCG and split bearers in MR-DC with 5GC (NGEN-DC, NE-DC and NR-DC);
Figure 5 illustrates UE pending data volume vs time and underutilized capacity causing extra overhead according to some embodiments;
Figure 6 illustrates the benefit that can achieved with an extra threshold according to some embodiments;
Figure 7 illustrates bearer configuration options in triple connectivity for MN terminated bearers according to some embodiments;
Figure 8 illustrates secondary node capacity and tertiary node capacity being activated according to some embodiments;
Figure 9 illustrates secondary node capacity and tertiary node capacity being activated according to some other embodiments;

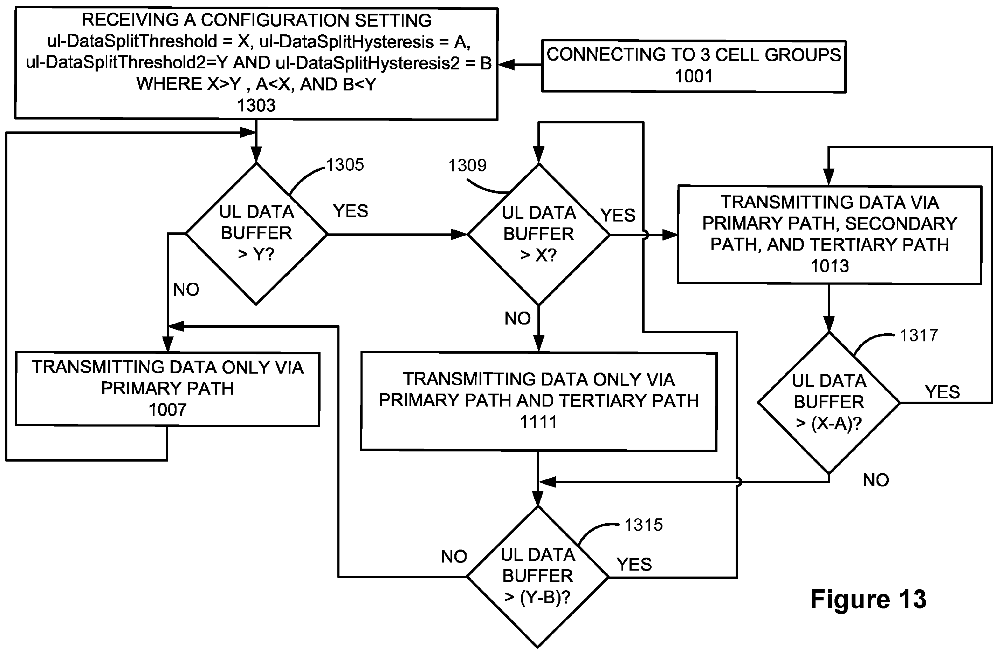

Figures 10 to 13 are flow chart illustrating operations of a wireless communication device according to some embodiments;
Figure 14 is a block diagram of a communication system in accordance with some embodiments;
Figure 15 is a block diagram of a user equipment in accordance with some embodiments
Figure 16 is a block diagram of a network node in accordance with some embodiments;
Figure 17 is a block diagram of a host computer communicating with a user equipment in accordance with some embodiments; and
Figure 18 is a block diagram of a virtualization environment in accordance with some embodiments.

### DETAILED DESCRIPTION

Some of the embodiments contemplated herein will now be described more fully with reference to the accompanying drawings. Embodiments are provided by way of example to convey the scope of the subject matter to those skilled in the art. , in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The term multi-connectivity (MC) refers to a configuration where a UE is connected to more than one base station at once. If the multi-connectivity refers to two connections, it may also be referred to as dual connectivity. If the multi-connectivity refers to three connection, it may also be referred to as triple connectivity.

As previously indicated, a logical extension of dual connectivity would be to introduce triple connectivity, or even >3 cell group multi-connectivity. If this would imply that a UE could be configured with a bearer split between three paths, the UE would need to be able to determine which of the paths it should use for uplink transmission. Using the current *ul-SplitDataThreshold* parameter means that the UE can either use one (primary) path or all paths and it is not possible to select different variants. Using too many unnecessary paths (without any clear benefit for the UE performance) causes an extra overhead in the UL since the UE may not have sufficient data in buffer to fully utilize received grants on all paths, and would have to transmit padding on some of the paths. In addition, the UE would have to split transmission power between the paths and the extra resources needed to transmit to a node that is worse than the primary node.

If the data exceeds the threshold, the UE uses all available paths. This is illustrated in Figure 5. In Figure 5, the white part (primary node throughput capacity) and different gray parts (secondary node throughput capacity and tertiary node throughput capacity) are the capacity for each respective node in a multi-connectivity connection. Curve 500 shows a multi-connectivity (MC) scenario using current solutions vs. no MC at all (curve 502). A problem with current solution is the third node (tertiary node) is activated but may cause extra overhead without clear benefit for the UE performance. The UE in this example connects to all paths (nodes) when the threshold is exceeded, it is not possible to allow to select different variants of path connections. When the pending data volume is below the *ul-SplitDataThreshold* (dashed line), the UE stops using the SN and tertiary node (TN). In the example in Figure 5, the UE's pending data volume exceeds the *ul-SplitDataThreshold* (dashed line in Figure 5) and therefore the UE starts using all paths. The use of all three paths is in this example not necessary and it would probably be better to only use two paths (primary and secondary or primary and tertiary) but this is not possible.

Another problem is when to turn off the different paths. With current solution the UE can only turn off all paths except the primary. This problem is shown in Figure 5. When the pending data volume is below the *ul-SplitDataThreshold*, it turns off all paths except the primary node too early as can be seen from curve 500 (showing the UE pending data volume).

If triple connectivity (or multi-connectivity with >3 paths) is introduced, the UE could be configured with split bearer across all paths. The different paths can be associated with different identifiers (as configured by the network to the UE in a signaling message).

If the UL data buffer is very large, the UE should use all available bandwidth and use all three paths, whereas if the UL data buffer is very small, the UE should only use one of the paths.

To achieve this, a second separate ul-SplitDataThreshold (e.g. *ul-SplitDataThreshold2*) is introduced and if the UL data buffer is:
- below the smallest threshold, the UE only uses the primary path
- above the smallest threshold and below the largest thresholds, the UE uses the primary and one of the other paths (depending on the relation between the threshold)
- above the largest threshold, the UE uses all paths.

When the network configures the second *ul-SplitDataThreshold* or the multiple paths, the network can indicate which paths are the primary path, secondary path and/or tertiary paths and/or any additional paths if more than 3 paths are configured.

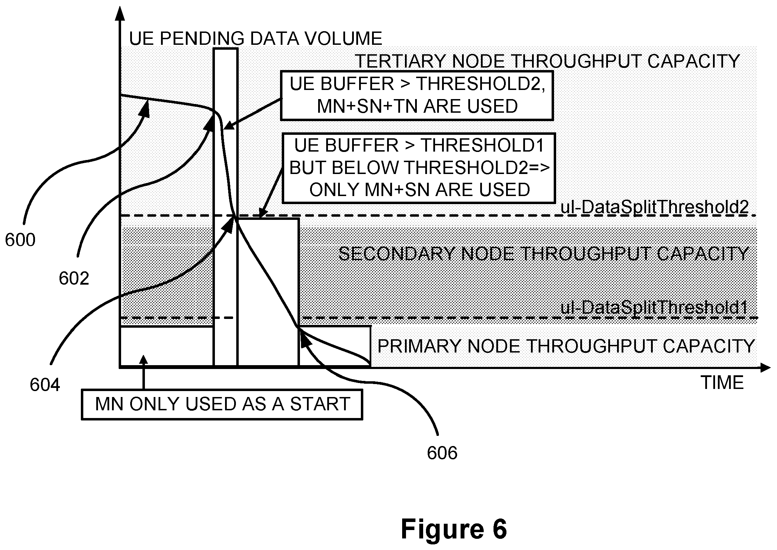

Figure 6 illustrates an example of the benefit of using more than one threshold. Turning to Figure 6, the UL data buffer is initially above *ul-DataSplitThreshold2* the MN, SN and TN paths are used starting at location 602. When the UL data buffer falls below *ul-DataSplitThreshold2* but remains above *ul-DataSplitThreshold1* at location 604, only the MN and SN paths are used. When the UL data buffer falls below *ul-DataSplitThreshold1* at location 606, only the MN path is used.

Note that Figure 6 can be further extended with additional thresholds if even more than 3 paths are setup.

In some embodiments, the data split is maintained even after a threshold has been surpassed. This can be done via using a timer or via using hysteresis of the data split threshold.

### Using A Timer

In case the UL buffer begin to exceed the threshold, it may be beneficial to not activate the second path immediately, but wait a short time to ensure that the data volume remains above the threshold, i.e. by introducing a time-to-trigger.

Similarly, if the UL data buffer has exceeded the threshold and the UE has activated the secondary or tertiary path, when the UL data buffer drops below the threshold again, the UE will resort to only use the primary path again, reducing the throughput for the remainder of the file. To achieve this, a new timer could be introduced, during which the UE continues to use the secondary (and possibly tertiary) path even if the UL data buffer is below the threshold. The value of the time can be configured by the network in a signaling message from the network to the UE or be specified in the standard.

### Using hysteresis of the data split threshold(s)

In case the UE has activated the secondary (and possibly tertiary) path because the UL data buffer exceeded the threshold, the instantaneous throughput will be the combined throughput of all the active paths. Once sufficiently of the UL data buffer has been transmitted through any of the paths so that the UL data buffer is below the threshold, the UE will resort to use only the primary path, which will reduce the throughput and possibly delay the completion of the data transfer.

In one embodiment, the UE is configured with a second threshold which acts as a hysteresis; if the UL data buffer has exceeded the initial threshold, the UE continues to use the both the primary and secondary path until the UL data buffer is below the second threshold (i.e. below the original threshold minus the hysteresis). The hysteresis value or second threshold can be configured by the network in a signaling message from network to UE or it can be specified in the standard.

Thus, in a multi-connectivity scenario, where the UE may be connected to M cell groups (more than two cell groups) simultaneously, assign M-1 UE data level thresholds (*ul-SplitDataThreshold*) to control the usage of the connections. Also, when the network configures the UL data level thresholds indicates which paths are the primary path, secondary path and/or tertiary paths etc. The network may also configure a hysteresis which allows even further fine tuning of connections.

By configuring the UE with multiple data buffer thresholds, an advantage that can be achieved is that the UE can be configured to only use a subset of the bandwidth available.

For instance, if the primary path is mainly for coverage and control plane (e.g. a wide-area coverage) and the secondary and tertiary paths are for data transfer, if the UE only have intermediate amount of data it should not activate all paths as this would unnecessarily increase power consumption and signalling overhead. However, if the UE has a large amount of data, it will benefit from the full available bandwidth.

The advantages also enables other strategies, by proper configuration of the thresholds, that can be applied by the network based on knowledge of the UE or radio conditions or network load e.g. it is possible to activate all carriers even at low buffer levels or load for some UEs e.g. this could be useful for high-end devices capable of running many carriers at once without negative effects, or at times of low network load where the extra overhead of using multiple carriers are low.

If a UE is uploading a large file, the UL data buffer will exceed the UL split data threshold and the UE will use both paths in dual-connectivity, and all three paths in triple connectivity.

If the threshold is set high, when the UE has uploaded sufficiently of the file so that the buffer drops below the threshold, the UE will revert to only use the primary path which reduces the bitrate and potentially delays the completion of the file transfer.

Another advantage that may be achieved is when a threshold hysteresis is introduced, the UE will continue to use all paths until the UL data buffer has reduced enough in size so that the primary path can solely handle the data transfer.

By making the hysteresis configurable by the network it is possible for the network to tune and optimize the performance based on performance measurements done in the network.

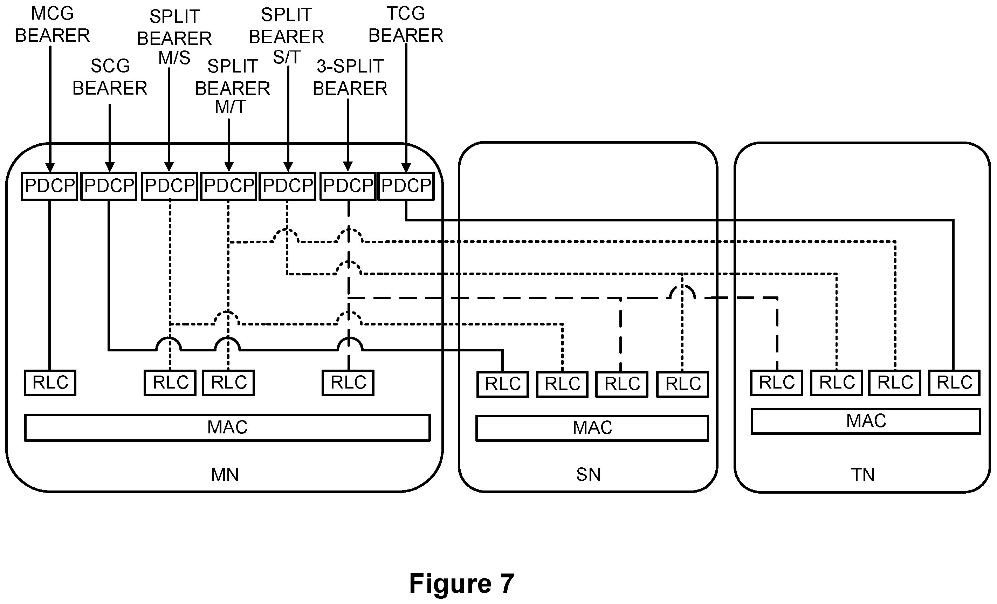

Figure 7 illustrates how bearer configuration (such as those illustrated in Figure 3) in triple connectivity for MN terminated bearers can be extended to TN nodes. Similar options for SN and TN terminated bearers are possible. In Figure 7, solid lines indicate a single cell group, dotted lines indicate two cell groups, and dashed lines indicate three cell groups.

The various embodiments described herein are described for uplink split bearers, where a new UL split-data threshold would be specified in standardization. However, the same solutions would apply for downlink, where the network employs multiple thresholds to determine which paths should be used for downlink.

By introducing a new UL split data threshold, (e.g. *ul-splitDataThreshold2*) and a new indication for the secondary path (in case of N>3 paths, N-1 paths need to be explicitly indicated and the last one is implicitly indicated).

If the UL data is above *ul-splitDataThreshold*, the UE splits the data between the secondary path and any other eligible path.

If the UL data is above *ul-splitDataThreshold2*, the UE splits the data between the tertiary path and any other eligible path.

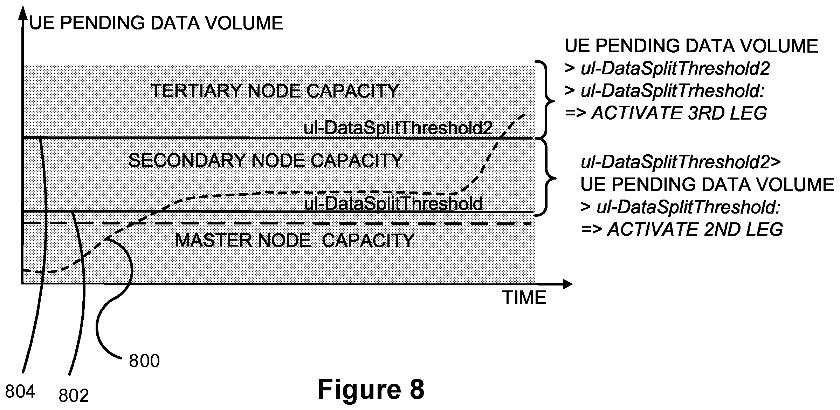

Thus, if *ul-SplitDataThreshold2> ul-SplitDataThreshold* and the UL data buffer is larger than *ul-SplitDataThreshold*, but smaller than *ul-SplitDataThreshold2*, the UE uses the primary path and the secondary path, as illustrated in Figure 8 where the UL data buffer is represented by line 800, *ul-SplitDataThreshold* is represented by line 802, and *SplitDataThreshold2* is represented by line 804. When the UL data buffer is larger than *ul-SplitDataThreshold* and *ul-SplitDataThreshold2*, the UE uses the primary path, the secondary path, and the tertiary path.

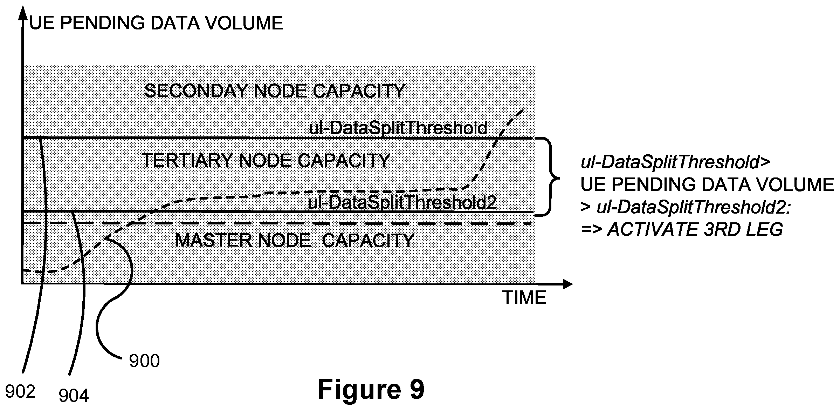

On the other hand, if *ul-SplitDataThreshold2< ul-SplitDataThreshold* and the UL data buffer is larger than *ul-SplitDataThreshold2*, but smaller than *ul-SplitDataThreshold*, the UE uses the primary path and the tertiary path. This is illustrated in Figure 9 where the UL data buffer is represented by line 900, the *ul-SplitDataThreshold1* is represented by line 902 and the *ul-SplitDataThreshold2* is represented by line 904.

This use of a single path or multiple paths based on thresholds can be extended to further paths, by introducing additional thresholds and path indications.

An example of how this could be introduced in to the 3GPP radio resource control (RRC) TS specification (38.331 v16.3.1) is shown below with double underlines: 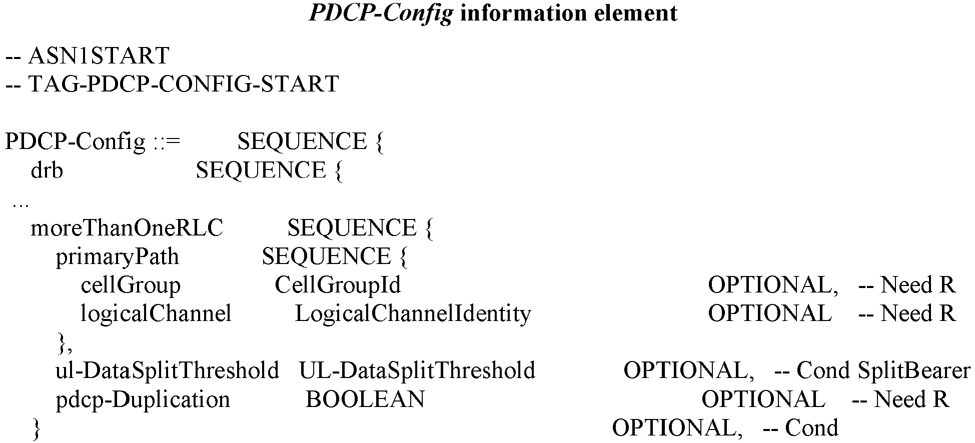 MoreThanOneRLC

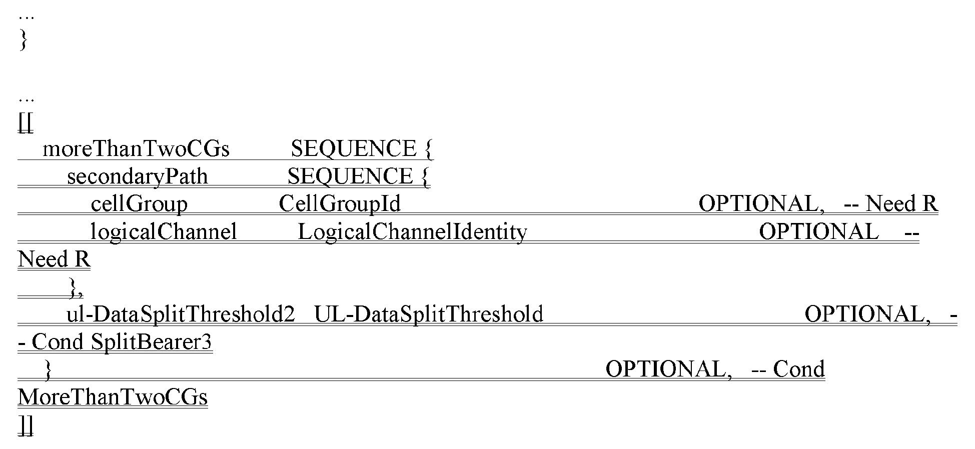

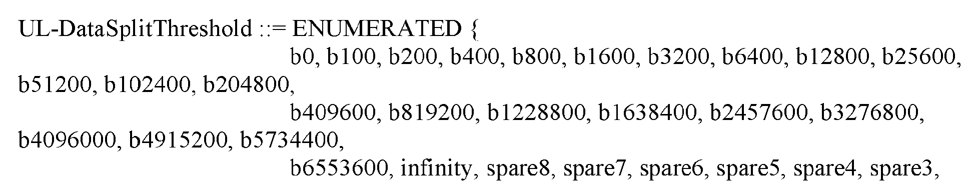

| ***ul-DataSplitThreshold*** |
|---|
| Parameter specified in TS 38.323 [5]. Value *b0* corresponds to 0 bytes, value *b100* corresponds to 100 bytes, value *b200* corresponds to 200 bytes, and so on. The network sets this field to *infinity* for UEs not supporting *splitDRB-withUL-Both-MCG-SCG.* If the field is absent when the split bearer is configured for the radio bearer first time, then the default value *infinity* is applied. |

| ***ul-DataSplitThreshold2*** |
|---|
| Parameter specified in TS 38.323 [5]. Value b0 corresponds to 0 bytes, value b100 corresponds to 100 bytes, value b200 corresponds to 200 bytes, and so on. The network sets this field to infinity for UEs not supporting splitDRB-withMoreThanTwoCGs. If the field is absent when the split bearer is configured for the radio bearer first time, then the default value infinity is applied. |

| ***moreThanOneRLC*** |
|---|
| This field configures UL data transmission when more than one RLC entity is associated with the PDCP entity. This field is not present if the bearer is configured as DAPS bearer. |

| ***moreThanTwoCGs*** |
|---|
| This field configures UL data transmission when more than two cell groups are associated with the PDCP entity. This field is not present if the bearer is configured as DAPS bearer. |

spare2, spare1}

| **Conditional presence** | **Explanation** |
|---|---|
| *MoreThanOneRLC* | This field is mandatory present upon RRC reconfiguration with setup of a PDCP entity for a radio bearer with more than one associated logical channel and upon RRC reconfiguration with the association of additional logical channels to the PDCP entity. |
| | The field is also mandatory present in case the field *moreThanTwoRLC-DRB* is included in *PDCP-Config.* |
| | Upon RRC reconfiguration when a PDCP entity is associated with multiple logical channels, this field is optionally present need M. |
| | Otherwise, this field is absent. Need R. |
| *MoreThanTwoRLC-DRB* | For SRBs, this field is absent. |
| | For DRBs, this field is mandatory present upon RRC reconfiguration with setup of a PDCP entity for a radio bearer with more than two associated logical channels and upon RRC reconfiguration with the association of one or more additional logical channel(s) to the PDCP entity so that the PDCP entity has more than two associated logical channels. |
| | Upon RRC reconfiguration when a PDCP entity is associated with more than two logical channels, this field is optionally present, Need M. |
| | Otherwise, the field is absent, Need R. |
| *MoreThanTwoCGs* | This field is mandatory present upon RRC reconfiguration with setup of a PDCP entity for a radio bearer with more than two cell groups. |
| | Upon RRC reconfiguration when a PDCP entity is associated with more than two cell groups, this field is optionally present need M. Otherwise, this field is absent. Need R. |
| *SplitBearer* | The field is absent for SRBs. Otherwise, the field is optional present, need M, in case of radio bearer with more than one associated RLC mapped to different cell groups. |
| *SplitBearer2* | The field is mandatory present, in case of a split bearer. Otherwise the field is absent. |
| *SplitBearer3* | The field is mandatory present, in case of a split bearer between three cell groups. Otherwise the field is absent. |

Additionally, the Cell Group ID field can be extended to support more values than 0 and 1 which is the current limit to allow more than 2 paths to be indicated. The Cell Group ID field is signaled as a 2-bit integer (i.e. enables 4 distinct values: 0..3), but the current specification limits it to only allow the values 0 and 1. Thus, the range can easily be extended to allow all four values without increasing the signaling overhead.

An example of how this could be introduced in to the 3GPP PDCP specification (3GPP TS 38.323 V16.3.0) is described below:

### 5.2.1 Transmit operation

At reception of a PDCP SDU from upper layers, the transmitting PDCP entity shall:
- start the *discardTimer* associated with this PDCP SDU (if configured).

For a PDCP SDU received from upper layers, the transmitting PDCP entity shall:
- associate the COUNT value corresponding to TX_NEXT to this PDCP SDU;

NOTE 1: Associating more than half of the PDCP SN space of contiguous PDCP SDUs with PDCP SNs, when e.g., the PDCP SDUs are discarded or transmitted without acknowledgement, may cause HFN desynchronization problem. How to prevent HFN desynchronization problem is left up to UE implementation.
- perform header compression of the PDCP SDU using ROHC as specified in the clause 5.7.4 and/or using EHC as specified in the clause 5.12.4;
- perform integrity protection, and ciphering using the TX_NEXT as specified in the clause 5.9 and 5.8, respectively;
- set the PDCP SN of the PDCP Data PDU to TX_NEXT modulo 2^{[*pdcp-SN-SizeUL*]};
- increment TX_NEXT by one;
- submit the resulting PDCP Data PDU to lower layer as specified below.

When submitting a PDCP PDU to lower layer, the transmitting PDCP entity shall:
- if the transmitting PDCP entity is associated with one RLC entity:
   - submit the PDCP PDU to the associated RLC entity;
- else, if the transmitting PDCP entity is associated with at least two RLC entities:
   - if the PDCP duplication is activated for the RB:
      - if the PDCP PDU is a PDCP Data PDU:
         - duplicate the PDCP Data PDU and submit the PDCP Data PDU to the associated RLC entities activated for PDCP duplication;
      - else:
         - submit the PDCP Control PDU to the primary RLC entity;
   - else (i.e. the PDCP duplication is deactivated for the RB):
      - if the split secondary RLC entity is configured; and
      - if the total amount of PDCP data volume and RLC data volume pending for initial transmission (as specified in TS 38.322 [5]) in the primary RLC entity and the split secondary RLC entity is equal to or larger than *ul-DataSplitThreshold*:
         - if the split tertiary RLC entity is configured; and
         - if the total amount of PDCP data volume and RLC data volume pending for initial transmission (as specified in TS 38.322 [5]) in the primary RLC entity and the split secondary RLC entity is equal to or larger than *ul-DataSplitThreshold*2:
            - submit the PDCP PDU to either the primary RLC entity, the split secondary RLC entity, or the split tertiary RLC entity;
         - else:
            - submit the PDCP PDU to either the primary RLC entity or the split secondary RLC entity;
      - else, if the transmitting PDCP entity is associated with the DAPS bearer:
         - if the uplink data switching has not been requested:
            - submit the PDCP PDU to the RLC entity associated with the source cell;
      - else:
         - if the PDCP PDU is a PDCP Data PDU:
            - submit the PDCP Data PDU to the RLC entity associated with the target cell;
         - else:
            - if the PDCP Control PDU is associated with source cell:
               - submit the PDCP Control PDU to the RLC entity associated with the source cell;
            - else:
               - submit the PDCP Control PDU to the RLC entity associated with the target cell;
   - else:
      - submit the PDCP PDU to the primary RLC entity.

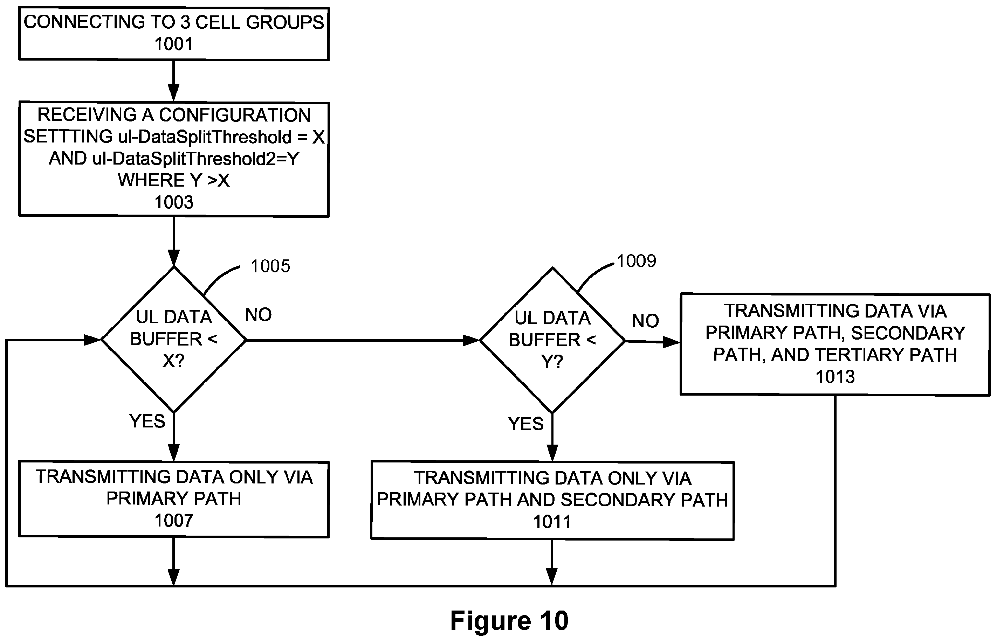

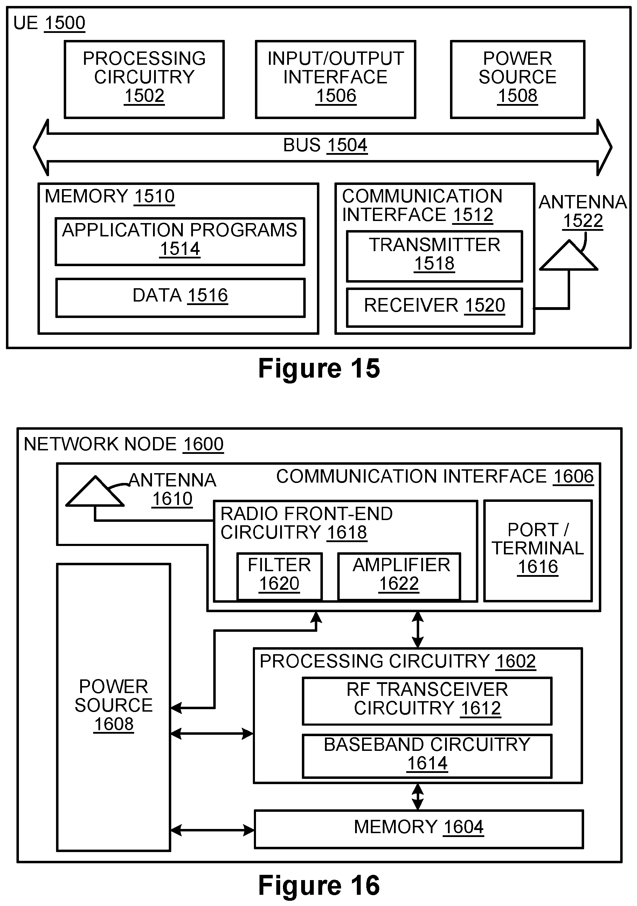

Operations of the communication device 1500 (implemented using the structure of the block diagram of Figure 15) will now be discussed with reference to the flow chart of Figure 10 according to some embodiments. For example, modules may be stored in memory 1510 of Figure 15, and these modules may provide instructions so that when the instructions of a module are executed by respective communication device processing circuitry 1502, processing circuitry 1502 and/or communication device 1500 performs respective operations of the flow chart.

Figure 10 illustrates a method performed in a wireless communication device 1500 having a data buffer and connected to three network nodes in a radio communication system.

Turning to Figure 10, in block 1001, the wireless communication device 1500, using processing circuitry 1502, connects to three different cell groups where the UE is configured to use a primary transmission path in a first cell group of the three different cell groups, a secondary transmission path in a second cell group of the three different cell groups, and a tertiary transmission path in a third cell group of the three different cell groups.

In block 1003, the wireless communication device 1500, using processing circuitry 1502, receives a configuration having a first data split threshold value and a second data split threshold value for modifying a data transmission path. In the method of Figure 10, the second split data threshold value is greater than the first data split threshold value.

In blocks 1007, 1011, and 1013, the wireless communication device 1500, using processing circuitry 1502, transmits data via only the primary transmission path, via only the primary transmission path and the secondary transmission path and via the primary transmission path, the secondary transmission path, and the tertiary transmission path based on the first data split threshold value and the second data split threshold value.

In block 1005, the wireless communication device 1500, using processing circuitry 1502, determines whether the data buffer is smaller than the first data split threshold value.

Responsive to the data buffer being smaller than the first data split threshold value, in block 1007, the wireless communication device 1500, using processing circuitry 1502, transmits the data via only the primary path.

In block 1009, the wireless communication device 1500, using processing circuitry 1502, determines whether the data buffer is greater than the second data split threshold value.

Responsive to the data buffer being larger than the first data split threshold value and smaller than the second data split threshold, in block 1011, the wireless communication device 1500, using processing circuitry 1502, transmits the data via only the primary transmission path and the secondary transmission path.

Responsive to the data buffer being larger than the first data split threshold value and larger than the second data split threshold, in block 1013, the wireless communication device 1500, using processing circuitry 1502, transmits the data via the primary transmission path, the secondary transmission path, and the tertiary transmission path.

Responsive to transmitting the data via the primary transmission path, the secondary transmission path, and the tertiary transmission path and the data buffer becoming smaller than the second data split threshold value and larger than the first data split threshold value, in block 1011, the wireless communication device 1500, using processing circuitry 1502, transmits the data via only the primary transmission path and the secondary transmission path.

Responsive to transmitting the data via the primary transmission path and the secondary transmission path and the data buffer becoming smaller than the second data split threshold value and smaller than the first data split threshold value, in block 1007, the wireless communication device 1500, using processing circuitry 1502, transmits the data via only the primary transmission path.

In some embodiments, the wireless communication device 1500, using processing circuitry 1502, can periodically check the UL data buffer to determine which of the paths to transmit data upon based on comparing the UL data buffer to the first data split threshold value and the second data split threshold. For example, the wireless communication device 1500, using processing circuitry 1502, can check the UL data buffer after each transmission to compare the UL data buffer level to the first data split threshold value and the second data split threshold value. If the UL data buffer level drops below X after a transmission, the wireless communication device 1500, using processing circuitry 1502, will transmit data only via the primary path. Similarly, if the UL data buffer level drops below Y but is still above X after a transmission, the wireless communication device 1500, using processing circuitry 1502, will transmit data only via the primary path and the secondary path. If the UL data buffer level is above Y and X after a transmission, the wireless communication device 1500, using processing circuitry 1502, will transmit data via the primary transmission path, the secondary transmission path, and the tertiary transmission path.

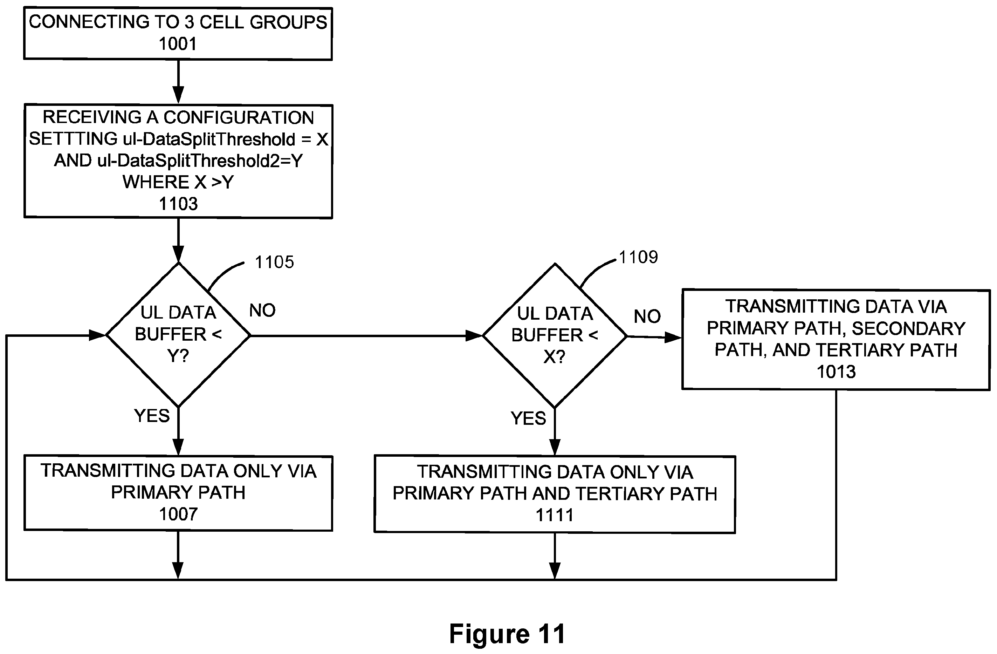

Figure 11 illustrates an alternate method performed in a wireless communication device 1500 having a data buffer and connected to three network nodes in a radio communication system. The blocks that are the same as in Figure 10 are labeled with the same block number as in Figure 10. In this alternate method, the second data split threshold value is less than the first data split threshold value.

In block 1103, the wireless communication device 1500, using processing circuitry 1502, receives the configuration having a first data split threshold value and a second data split threshold value for modifying a data transmission path but in this case, the second data split threshold value is less than the first data split threshold value.

In block 1105, the wireless communication device 1500, using processing circuitry 1502, determines whether the data buffer is smaller than the second data split threshold value.

Responsive to the data buffer being smaller than the second data split threshold value, in block 1007, the wireless communication device 1500, using processing circuitry 1502, transmits the data via only the primary path.

In block 1109, the wireless communication device 1500, using processing circuitry 1502, determines whether the data buffer is greater than the first data split threshold value.

Responsive to the data buffer being larger than the second data split threshold value and smaller than the first data split threshold, in block 1111, the wireless communication device 1500, using processing circuitry 1502, transmits the data via only the primary transmission path and the tertiary transmission path.

Responsive to the data buffer being larger than the second data split threshold value and larger than the first data split threshold, in block 1013, the wireless communication device 1500, using processing circuitry 1502, transmits the data via the primary transmission path, the secondary transmission path, and the tertiary transmission path.

Responsive to transmitting the data via the primary transmission path, the secondary transmission path, and the tertiary transmission path and the data buffer becoming greater than the second data split threshold value and smaller than the first data split threshold value, in block 1111, the wireless communication device 1500, using processing circuitry 1502, transmits the data via only the primary transmission path and the tertiary transmission path.

In some embodiments, the wireless communication device 1500, using processing circuitry 1502, can periodically check the UL data buffer to determine which of the paths to transmit data upon based on comparing the UL data buffer to the first data split threshold value and the second data split threshold.

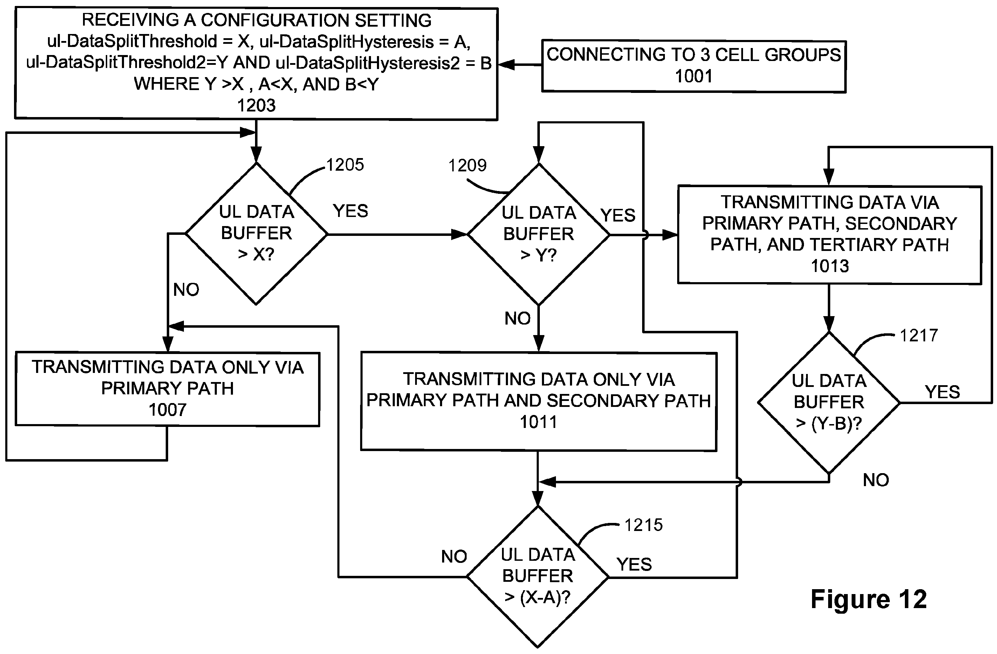

Figure 12 illustrates the method of Figure 10 with hysteresis added. The blocks that are the same as in Figure 10 are labeled with the same block number as in Figure 10.

In block 1203, the wireless communication device 1500, using processing circuitry 1502, receives a configuration having a first data split threshold value and a second data split threshold value for modifying a data transmission path. In the method of Figure 12, the second split data threshold value is greater than the first data split threshold value, the first hysteresis value is less than the first split data threshold value, and the second hysteresis value is less than the second data split threshold value.

If the wireless communication device 1500 has transmitted data via the primary path and the secondary path because the data buffer was larger than the first data split threshold value and smaller than the second data split threshold value, the wireless communication device 1500, in block 1215 determines whether the UL data buffer has shrunk below the first data split threshold value minus the first hysteresis value. Responsive to the data buffer being below the first data split threshold value minus the first hysteresis value, in block 1107, the wireless communication device 1500, using processing circuitry 1502, will transmit data only via the primary path, otherwise the wireless communication device 1500, using processing circuitry 1502, continues to transmit data using the primary path and the secondary path.

If the wireless communication device 1500 has transmitted data via the primary path, the secondary path, and the tertiary path because the data buffer was larger than the first data split threshold value and larger than the second data split threshold value, the wireless communication device 1500, in block 1217 determines whether the UL data buffer has shrunk below the second data split threshold value minus the second hysteresis value. Responsive to the data buffer being below the second data split threshold value minus the second hysteresis value, in block 1111, the wireless communication device 1500, using processing circuitry 1502, will transmit data only via the primary path and the secondary path , otherwise the wireless communication device 1500, using processing circuitry 1502, continues to transmit data using the primary path, the secondary path, and the tertiary path.

Figure 12 illustrates the method of Figure 10 with hysteresis added. The blocks that are the same as in Figure 10 are labeled with the same block number as in Figure 10 and the blocks that are the same as in Figure 11 are labeled with the same block number as in Figure 11.

In block 1303, the wireless communication device 1500, using processing circuitry 1502, receives a configuration having a first data split threshold value and a second data split threshold value for modifying a data transmission path. In the method of Figure 12, the first split data threshold value is greater than the second data split threshold value, the first hysteresis value is less than the first split data threshold value, and the second hysteresis value is less than the second data split threshold value.

If the wireless communication device 1500 has transmitted data via the primary path and the tertiary path because the data buffer was larger than the second data split threshold value and smaller than the first data split threshold value, the wireless communication device 1500, in block 1315 determines whether the UL data buffer has shrunk below the second data split threshold value minus the second hysteresis value. Responsive to the data buffer being below the second data split threshold value minus the second hysteresis value, in block 1107, the wireless communication device 1500, using processing circuitry 1502, will transmit data only via the primary path, otherwise the wireless communication device 1500, using processing circuitry 1502, continues to transmit data using the primary path and the tertiary path.

If the wireless communication device 1500 has transmitted data via the primary path, the secondary path, and the tertiary path because the data buffer was larger than the first data split threshold value and larger than the second data split threshold value, the wireless communication device 1500, in block 1317 determines whether the UL data buffer has shrunk below the first data split threshold value minus the first hysteresis value. Responsive to the data buffer being below the first data split threshold value minus the first hysteresis value, in block 1111, the wireless communication device 1500, using processing circuitry 1502, will transmit data only via the primary path and the tertiary path. Otherwise the wireless communication device 1500, using processing circuitry 1502, continues to transmit data using the primary path, the secondary path, and the tertiary path.

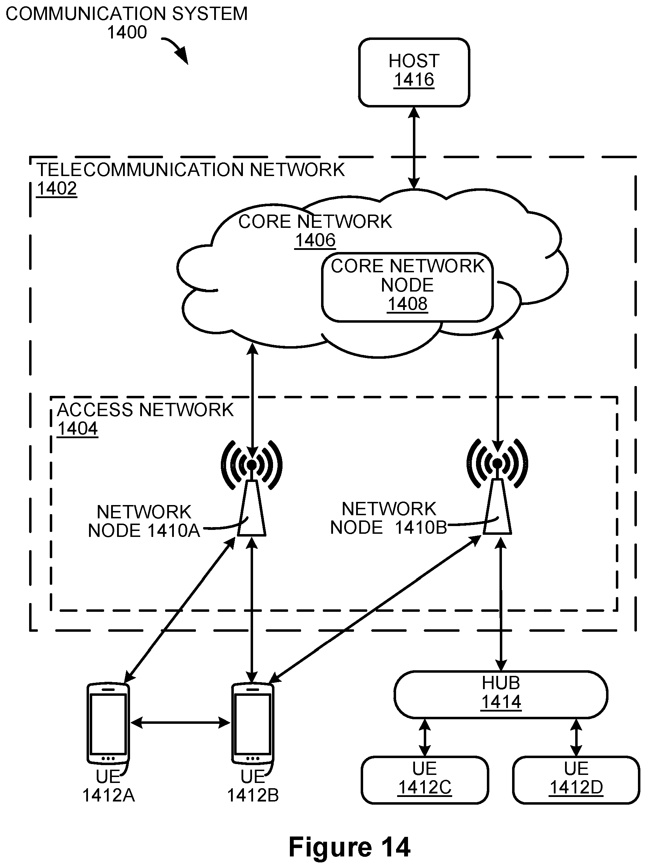

Figure 14 shows an example of a communication system 1400 in accordance with some embodiments.

In the example, the communication system 1400 includes a telecommunication network 1402 that includes an access network 1404, such as a radio access network (RAN), and a core network 1406, which includes one or more core network nodes 1408. The access network 1404 includes one or more access network nodes, such as network nodes 1410A and 1410B (one or more of which may be generally referred to as network nodes 1410), or any other similar 3^{rd} Generation Partnership Project (3GPP) access node or non-3GPP access point. The network nodes 1410 facilitate direct or indirect connection of user equipment (UE), such as by connecting UEs 1412A, 1412B, 1412C, and 1412D (one or more of which may be generally referred to as UEs 1412) to the core network 1406 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 1400 may include any number of wired or wireless networks, network nodes, UEs, and/or any other components or systems that may facilitate or participate in the communication of data and/or signals whether via wired or wireless connections. The communication system 1400 may include and/or interface with any type of communication, telecommunication, data, cellular, radio network, and/or other similar type of system.

The UEs 1412 may be any of a wide variety of communication devices, including wireless devices arranged, configured, and/or operable to communicate wirelessly with the network nodes 1410 and other communication devices. Similarly, the network nodes 1410 are arranged, capable, configured, and/or operable to communicate directly or indirectly with the UEs 1412 and/or with other network nodes or equipment in the telecommunication network 1402 to enable and/or provide network access, such as wireless network access, and/or to perform other functions, such as administration in the telecommunication network 1402.

In the depicted example, the core network 1406 connects the network nodes 1410 to one or more hosts, such as host 1416. These connections may be direct or indirect via one or more intermediary networks or devices. In other examples, network nodes may be directly coupled to hosts. The core network 1406 includes one more core network nodes (e.g., core network node 1408) that are structured with hardware and software components. Features of these components may be substantially similar to those described with respect to the UEs, network nodes, and/or hosts, such that the descriptions thereof are generally applicable to the corresponding components of the core network node 1408. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 1416 may be under the ownership or control of a service provider other than an operator or provider of the access network 1404 and/or the telecommunication network 1402, and may be operated by the service provider or on behalf of the service provider. The host 1416 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 1400 of Figure 14 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 1402 is a cellular network that implements 3GPP standardized features. Accordingly, the telecommunications network 1402 may support network slicing to provide different logical networks to different devices that are connected to the telecommunication network 1402. For example, the telecommunications network 1402 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 1412 are configured to transmit and/or receive information without direct human interaction. For instance, a UE may be designed to transmit information to the access network 1404 on a predetermined schedule, when triggered by an internal or external event, or in response to requests from the access network 1404. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 1414 communicates with the access network 1404 to facilitate indirect communication between one or more UEs (e.g., UE 1412C and/or 1412D) and network nodes (e.g., network node 1410B). In some examples, the hub 1414 may be a controller, router, content source and analytics, or any of the other communication devices described herein regarding UEs. For example, the hub 1414 may be a broadband router enabling access to the core network 1406 for the UEs. As another example, the hub 1414 may be a controller that sends commands or instructions to one or more actuators in the UEs. Commands or instructions may be received from the UEs, network nodes 1410, or by executable code, script, process, or other instructions in the hub 1414. As another example, the hub 1414 may be a data collector that acts as temporary storage for UE data and, in some embodiments, may perform analysis or other processing of the data. As another example, the hub 1414 may be a content source. For example, for a UE that is a VR headset, display, loudspeaker or other media delivery device, the hub 1414 may retrieve VR assets, video, audio, or other media or data related to sensory information via a network node, which the hub 1414 then provides to the UE either directly, after performing local processing, and/or after adding additional local content. In still another example, the hub 1414 acts as a proxy server or orchestrator for the UEs, in particular in if one or more of the UEs are low energy IoT devices.

The hub 1414 may have a constant/persistent or intermittent connection to the network node 1410B. The hub 1414 may also allow for a different communication scheme and/or schedule between the hub 1414 and UEs (e.g., UE 1412C and/or 1412D), and between the hub 1414 and the core network 1406. In other examples, the hub 1414 is connected to the core network 1406 and/or one or more UEs via a wired connection. Moreover, the hub 1414 may be configured to connect to an M2M service provider over the access network 1404 and/or to another UE over a direct connection. In some scenarios, UEs may establish a wireless connection with the network nodes 1410 while still connected via the hub 1414 via a wired or wireless connection. In some embodiments, the hub 1414 may be a dedicated hub - that is, a hub whose primary function is to route communications to/from the UEs from/to the network node 1410B. In other embodiments, the hub 1414 may be a non-dedicated hub - that is, a device which is capable of operating to route communications between the UEs and network node 1410B, but which is additionally capable of operating as a communication start and/or end point for certain data channels.

Figure 15 shows a UE 1500 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 1500 includes processing circuitry 1502 that is operatively coupled via a bus 1504 to an input/output interface 1506, a power source 1508, a memory 1510, a communication interface 1512, and/or any other component, or any combination thereof. Certain UEs may utilize all or a subset of the components shown in Figure 15. The level of integration between the components may vary from one UE to another UE. Further, certain UEs may contain multiple instances of a component, such as multiple processors, memories, transceivers, transmitters, receivers, etc.

The processing circuitry 1502 is configured to process instructions and data and may be configured to implement any sequential state machine operative to execute instructions stored as machine-readable computer programs in the memory 1510. The processing circuitry 1502 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 1502 may include multiple central processing units (CPUs).

In the example, the input/output interface 1506 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 1500. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 1508 is structured as a battery or battery pack. Other types of power sources, such as an external power source (e.g., an electricity outlet), photovoltaic device, or power cell, may be used. The power source 1508 may further include power circuitry for delivering power from the power source 1508 itself, and/or an external power source, to the various parts of the UE 1500 via input circuitry or an interface such as an electrical power cable. Delivering power may be, for example, for charging of the power source 1508. Power circuitry may perform any formatting, converting, or other modification to the power from the power source 1508 to make the power suitable for the respective components of the UE 1500 to which power is supplied.

The memory 1510 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 1510 includes one or more application programs 1514, such as an operating system, web browser application, a widget, gadget engine, or other application, and corresponding data 1516. The memory 1510 may store, for use by the UE 1500, any of a variety of various operating systems or combinations of operating systems.

The memory 1510 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 1510 may allow the UE 1500 to access instructions, application programs and the like, stored on transitory or non-transitory memory media, to off-load data, or to upload data. An article of manufacture, such as one utilizing a communication system may be tangibly embodied as or in the memory 1510, which may be or comprise a device-readable storage medium.

The processing circuitry 1502 may be configured to communicate with an access network or other network using the communication interface 1512. The communication interface 1512 may comprise one or more communication subsystems and may include or be communicatively coupled to an antenna 1522. The communication interface 1512 may include one or more transceivers used to communicate, such as by communicating with one or more remote transceivers of another device capable of wireless communication (e.g., another UE or a network node in an access network). Each transceiver may include a transmitter 1518 and/or a receiver 1520 appropriate to provide network communications (e.g., optical, electrical, frequency allocations, and so forth). Moreover, the transmitter 1518 and receiver 1520 may be coupled to one or more antennas (e.g., antenna 1522) and may share circuit components, software or firmware, or alternatively be implemented separately.

In the illustrated embodiment, communication functions of the communication interface 1512 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 1512, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 1500 shown in Figure 15.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 16 shows a network node 1600 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 1600 includes a processing circuitry 1602, a memory 1604, a communication interface 1606, and a power source 1608. The network node 1600 may be composed of multiple physically separate components (e.g., a NodeB component and a RNC component, or a BTS component and a BSC component, etc.), which may each have their own respective components. In certain scenarios in which the network node 1600 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 1600 may be configured to support multiple radio access technologies (RATs). In such embodiments, some components may be duplicated (e.g., separate memory 1604 for different RATs) and some components may be reused (e.g., a same antenna 1610 may be shared by different RATs). The network node 1600 may also include multiple sets of the various illustrated components for different wireless technologies integrated into network node 1600, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1600.

The processing circuitry 1602 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1600 components, such as the memory 1604, to provide network node 1600 functionality.

In some embodiments, the processing circuitry 1602 includes a system on a chip (SOC). In some embodiments, the processing circuitry 1602 includes one or more of radio frequency (RF) transceiver circuitry 1612 and baseband processing circuitry 1614. In some embodiments, the radio frequency (RF) transceiver circuitry 1612 and the baseband processing circuitry 1614 may be on separate chips (or sets of chips), boards, or units, such as radio units and digital units. In alternative embodiments, part or all of RF transceiver circuitry 1612 and baseband processing circuitry 1614 may be on the same chip or set of chips, boards, or units.

The memory 1604 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 1602. The memory 1604 may store any suitable instructions, data, or information, including a computer program, software, an application including one or more of logic, rules, code, tables, and/or other instructions capable of being executed by the processing circuitry 1602 and utilized by the network node 1600. The memory 1604 may be used to store any calculations made by the processing circuitry 1602 and/or any data received via the communication interface 1606. In some embodiments, the processing circuitry 1602 and memory 1604 is integrated.

The communication interface 1606 is used in wired or wireless communication of signaling and/or data between a network node, access network, and/or UE. As illustrated, the communication interface 1606 comprises port(s)/terminal(s) 1616 to send and receive data, for example to and from a network over a wired connection. The communication interface 1606 also includes radio front-end circuitry 1618 that may be coupled to, or in certain embodiments a part of, the antenna 1610. Radio front-end circuitry 1618 comprises filters 1620 and amplifiers 1622. The radio front-end circuitry 1618 may be connected to an antenna 1610 and processing circuitry 1602. The radio front-end circuitry may be configured to condition signals communicated between antenna 1610 and processing circuitry 1602. The radio front-end circuitry 1618 may receive digital data that is to be sent out to other network nodes or UEs via a wireless connection. The radio front-end circuitry 1618 may convert the digital data into a radio signal having the appropriate channel and bandwidth parameters using a combination of filters 1620 and/or amplifiers 1622. The radio signal may then be transmitted via the antenna 1610. Similarly, when receiving data, the antenna 1610 may collect radio signals which are then converted into digital data by the radio front-end circuitry 1618. The digital data may be passed to the processing circuitry 1602. In other embodiments, the communication interface may comprise different components and/or different combinations of components.

In certain alternative embodiments, the network node 1600 does not include separate radio front-end circuitry 1618, instead, the processing circuitry 1602 includes radio front-end circuitry and is connected to the antenna 1610. Similarly, in some embodiments, all or some of the RF transceiver circuitry 1612 is part of the communication interface 1606. In still other embodiments, the communication interface 1606 includes one or more ports or terminals 1616, the radio front-end circuitry 1618, and the RF transceiver circuitry 1612, as part of a radio unit (not shown), and the communication interface 1606 communicates with the baseband processing circuitry 1614, which is part of a digital unit (not shown).

The antenna 1610 may include one or more antennas, or antenna arrays, configured to send and/or receive wireless signals. The antenna 1610 may be coupled to the radio front-end circuitry 1618 and may be any type of antenna capable of transmitting and receiving data and/or signals wirelessly. In certain embodiments, the antenna 1610 is separate from the network node 1600 and connectable to the network node 1600 through an interface or port.

The antenna 1610, communication interface 1606, and/or the processing circuitry 1602 may be configured to perform any receiving operations and/or certain obtaining operations described herein as being performed by the network node. Any information, data and/or signals may be received from a UE, another network node and/or any other network equipment. Similarly, the antenna 1610, the communication interface 1606, and/or the processing circuitry 1602 may be configured to perform any transmitting operations described herein as being performed by the network node. Any information, data and/or signals may be transmitted to a UE, another network node and/or any other network equipment.

The power source 1608 provides power to the various components of network node 1600 in a form suitable for the respective components (e.g., at a voltage and current level needed for each respective component). The power source 1608 may further comprise, or be coupled to, power management circuitry to supply the components of the network node 1600 with power for performing the functionality described herein. For example, the network node 1600 may be connectable to an external power source (e.g., the power grid, an electricity outlet) via an input circuitry or interface such as an electrical cable, whereby the external power source supplies power to power circuitry of the power source 1608. As a further example, the power source 1608 may comprise a source of power in the form of a battery or battery pack which is connected to, or integrated in, power circuitry. The battery may provide backup power should the external power source fail.

Embodiments of the network node 1600 may include additional components beyond those shown in Figure 16 for providing certain aspects of the network node's functionality, including any of the functionality described herein and/or any functionality necessary to support the subject matter described herein. For example, the network node 1600 may include user interface equipment to allow input of information into the network node 1600 and to allow output of information from the network node 1600. This may allow a user to perform diagnostic, maintenance, repair, and other administrative functions for the network node 1600.

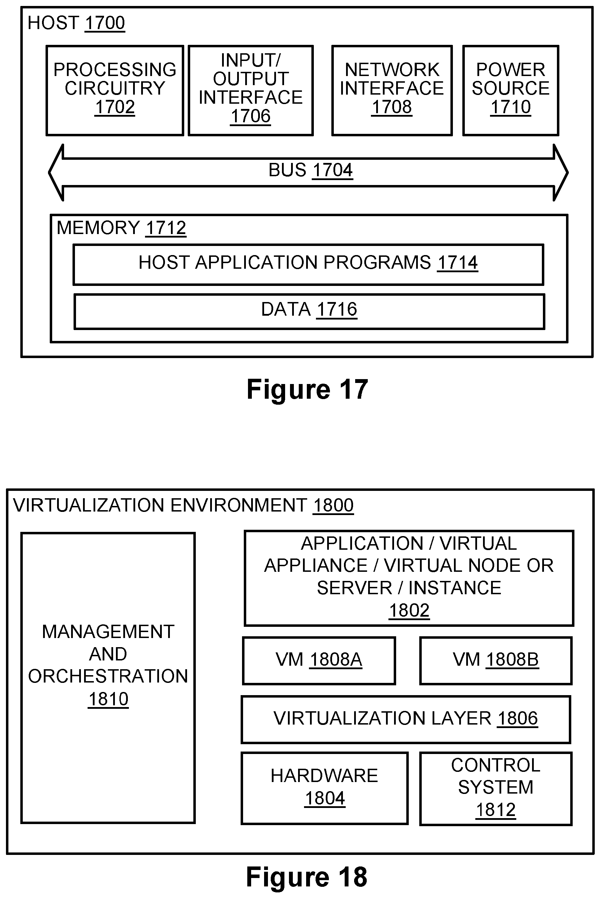

Figure 17 is a block diagram of a host 1700, which may be an embodiment of the host 1416 of Figure 14, in accordance with various aspects described herein. As used herein, the host 1700 may be or comprise various combinations hardware and/or software, including a standalone server, a blade server, a cloud-implemented server, a distributed server, a virtual machine, container, or processing resources in a server farm. The host 1700 may provide one or more services to one or more UEs.

The host 1700 includes processing circuitry 1702 that is operatively coupled via a bus 1704 to an input/output interface 1706, a network interface 1708, a power source 1710, and a memory 1712. Other components may be included in other embodiments. Features of these components may be substantially similar to those described with respect to the devices of previous figures, such as Figures 15 and 16, such that the descriptions thereof are generally applicable to the corresponding components of host 1700.

The memory 1712 may include one or more computer programs including one or more host application programs 1714 and data 1716, which may include user data, e.g., data generated by a UE for the host 1700 or data generated by the host 1700 for a UE. Embodiments of the host 1700 may utilize only a subset or all of the components shown. The host application programs 1714 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 1714 may also provide for user authentication and licensing checks and may periodically report health, routes, and content availability to a central node, such as a device in or on the edge of a core network. Accordingly, the host 1700 may select and/or indicate a different host for over-the-top services for a UE. The host application programs 1714 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 18 is a block diagram illustrating a virtualization environment 1800 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1800 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1802 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 1804 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1806 (also referred to as hypervisors or virtual machine monitors (VMMs)), provide VMs 1808a and 1808b (one or more of which may be generally referred to as VMs 1808), and/or perform any of the functions, features and/or benefits described in relation with some embodiments described herein. The virtualization layer 1806 may present a virtual operating platform that appears like networking hardware to the VMs 1808.

The VMs 1808 comprise virtual processing, virtual memory, virtual networking or interface and virtual storage, and may be run by a corresponding virtualization layer 1806. Different embodiments of the instance of a virtual appliance 1802 may be implemented on one or more of VMs 1808, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1808 may be a software implementation of a physical machine that runs programs as if they were executing on a physical, non-virtualized machine. Each of the VMs 1808, and that part of hardware 1804 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1808 on top of the hardware 1804 and corresponds to the application 1802.

Hardware 1804 may be implemented in a standalone network node with generic or specific components. Hardware 1804 may implement some functions via virtualization. Alternatively, hardware 1804 may be part of a larger cluster of hardware (e.g. such as in a data center or CPE) where many hardware nodes work together and are managed via management and orchestration 1810, which, among others, oversees lifecycle management of applications 1802. In some embodiments, hardware 1804 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1812 which may alternatively be used for communication between hardware nodes and radio units.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

## Claims

1. A method performed by a wireless communication device (1500) having a data buffer and connected to three network nodes in a radio communication system, the method comprising:
connecting (1001) to three different cell groups where the wireless communication device is configured to use a primary transmission path in a first cell group of the three different cell groups, a secondary transmission path in a second cell group of the three different cell groups, and a tertiary transmission path in a third cell group of the three different cell groups;
receiving (1003) a configuration having a first data split threshold value and a second data split threshold value for modifying a data transmission path; and
transmitting data via only the primary transmission path (1007), via only the primary transmission path and the secondary transmission path (1011) and via the primary transmission path, the secondary transmission path, and the tertiary transmission path (1013) based on the first data split threshold value and the second data split threshold value.

2. The method of Claim 1, wherein the second data split threshold value is greater than the first data split threshold value and transmitting data via only the primary transmission path, via only the primary transmission path and the secondary transmission path and via the primary transmission path, the secondary transmission path, and the tertiary path transmission based on the first data split threshold value and the second data split threshold value comprises:
responsive to the data buffer being smaller than the first data split threshold value (1005), transmitting (1007) the data via only the primary path.

3. The method of any of Claims 1-2, wherein the second data split threshold value is greater than the first data split threshold value and transmitting data via only the primary transmission path, via only the primary transmission path and the secondary transmission path and via the primary transmission path, the secondary transmission path, and the tertiary transmission path based on the first data split threshold value and the second data split threshold value comprises:
responsive to the data buffer being larger than the first data split threshold value and smaller than the second data split threshold, transmitting (1011) the data via only the primary transmission path and the secondary transmission path.

4. The method of Claim 3, the method further comprising:
responsive to transmitting the data via the primary transmission path and the secondary transmission path and the data buffer becoming smaller than the second data split threshold value and smaller than the first data split threshold value, transmitting (1007) the data via only the primary transmission path.

5. The method of Claim 1, wherein the second data split threshold value is smaller than the first data split threshold value and transmitting data via only the primary transmission path, via only the primary transmission path and the secondary transmission path and via the primary transmission path, the secondary transmission path, and the tertiary path transmission based on the first data split threshold value and the second data split threshold value comprises:
responsive to the data buffer being smaller than the second data split threshold value, transmitting (1107) the data via only the primary path.

6. The method of any of Claims 1 and 4-5, wherein the second data split threshold value is smaller than the first data split threshold value and transmitting data via only the primary transmission path, via only the primary transmission path and the secondary transmission path and via the primary transmission path, the secondary transmission path, and the tertiary transmission path based on the first data split threshold value and the second data split threshold value comprises:
responsive to the data buffer being larger than the second data split threshold value and smaller than the first data split threshold, transmitting (1111) the data via only the primary transmission path and the tertiary transmission path.

7. The method of any of Claims 1-6, wherein transmitting data via only the primary transmission path, via only the primary transmission path and the secondary transmission path and via the primary transmission path, the secondary transmission path, and the tertiary transmission path based on the first data split threshold value and the second data split threshold value comprises:
responsive to the data buffer being larger than the first data split threshold value and larger than the second data split threshold, transmitting (1013) the data via the primary transmission path, the secondary transmission path, and the tertiary transmission path.

8. The method of Claim 7, wherein the second data split threshold value is greater than the first data split threshold value, the method further comprising:
responsive to transmitting the data via the primary transmission path, the secondary transmission path, and the tertiary transmission path and the data buffer becoming smaller than the second data split threshold value and larger than the first data split threshold value, transmitting (1011) the data via only the primary transmission path and the secondary transmission path.

9. The method of Claim 7, wherein the second data split threshold value is smaller than the first data split threshold value, the method further comprising:
responsive to transmitting the data via the primary transmission path, the secondary transmission path, and the tertiary transmission path and the data buffer becoming greater than the second data split threshold value and smaller than the first data split threshold value, transmitting (1111) the data via only the primary transmission path and the tertiary transmission path.

10. The method of any of Claims 1-4 and 7-8, wherein the configuration further has a first data split hysteresis value associated with the first data split threshold value and a second data split hysteresis value associated with the second data split threshold value and the second data split threshold value is higher than the first data split threshold value, the method further comprising:
responsive to transmitting data only via the primary transmission path and the secondary transmission path, determining (1215) whether the data buffer has fallen below the first data split threshold value minus the first data split hysteresis value; and
responsive to determining that the data buffer has fallen below the first data split threshold value minus the first data split hysteresis value, transmitting (1007) data only via the primary transmission path.

11. The method of Claim 10, further comprising:
responsive to determining that the data buffer has not fallen below the first data split threshold value minus the first data split hysteresis value, transmitting (1011) data only via the primary transmission path and the secondary transmission path.

12. The method of any of Claims 10-11, further comprising:
responsive to transmitting data via the primary transmission path, the secondary transmission path and the tertiary transmission path, determining (1217) whether the data buffer has fallen below the second data split threshold value minus the second data split hysteresis value; and
responsive to determining that the data buffer has fallen below the second data split threshold value minus the second data split hysteresis value but above the first data split threshold vale, transmitting (1011) data only via the primary transmission path and the secondary transmission path.

13. The method of Claim 12, further comprising:
responsive to determining that the data buffer has not fallen below the second data split threshold value minus the second data split hysteresis value, transmitting (1013) data via the primary transmission path, the secondary transmission path, and the tertiary transmission path.

14. The method of any of Claims 1, and 5-8, wherein the configuration further has a first data split hysteresis value associated with the first data split threshold value and a second data split hysteresis value associated with the second data split threshold value and the second data split threshold is smaller than the first data split threshold, the method further comprising:
responsive to transmitting data only via the primary transmission path and the tertiary transmission path, determining (1315) whether the data buffer has fallen below the second data split threshold value minus the second data split hysteresis value; and
responsive to determining that the data buffer has fallen below the second data split threshold value minus the second data split hysteresis value, transmitting (1007) data only via the primary transmission path.

15. The method of Claim 14, further comprising:
responsive to determining that the data buffer has not fallen below the second data split threshold value minus the second data split hysteresis value, transmitting (1111) data only via the primary transmission path and the tertiary transmission path.

16. The method of any of Claims 14-15, further comprising:
responsive to transmitting data via the primary transmission path, the secondary transmission path and the tertiary transmission path, determining (1317) whether the data buffer has fallen below the first data split threshold value minus the first data split hysteresis value but above the second data split threshold value; and
responsive to determining that the data buffer has fallen below the first data split threshold value minus the first data split hysteresis value but above the second data split threshold vale, transmitting (1111) data only via the primary transmission path and the tertiary transmission path.

17. The method of Claim 16, further comprising:
responsive to determining that the data buffer has not fallen below the first data split threshold value minus the first data split hysteresis value, transmitting (1013) data via the primary transmission path, the secondary transmission path, and the tertiary transmission path.

18. A wireless communication device (1500) adapted to perform the method according to any of claims 1-17.

## Patentansprüche

1. Verfahren, das von einer drahtlosen Kommunikationsvorrichtung (1500) durchgeführt wird, die einen Datenpuffer aufweist und mit drei Netzwerkknoten in einem Funkkommunikationssystem verbunden ist, wobei das Verfahren Folgendes umfasst:
Herstellen einer Verbindung (1001) zu drei verschiedenen Zellengruppen, wobei die drahtlose Kommunikationsvorrichtung dazu konfiguriert ist, einen primären Übertragungspfad in einer ersten Zellengruppe der drei verschiedenen Zellengruppen, einen sekundären Übertragungspfad in einer zweiten Zellengruppe der drei verschiedenen Zellengruppen und einen tertiären Übertragungspfad in einer dritten Zellengruppe der drei verschiedenen Zellengruppen zu verwenden;
Empfangen (1003) einer Konfiguration mit einem ersten Datenteilungsschwellenwert und einem zweiten Datenteilungsschwellenwert zum Modifizieren eines Datenübertragungspfads; und
Senden von Daten nur über den primären Übertragungspfad (1007), nur über den primären Übertragungspfad und den sekundären Übertragungspfad (1011) und über den primären Übertragungspfad, den sekundären Übertragungspfad und den tertiären Übertragungspfad (1013) basierend auf dem ersten Datenteilungsschwellenwert und dem zweiten Datenteilungsschwellenwert.

2. Verfahren nach Anspruch 1, wobei der zweite Datenteilungsschwellenwert größer als der erste Datenteilungsschwellenwert ist und das Senden von Daten nur über den primären Übertragungspfad, nur über den primären Übertragungspfad und den sekundären Übertragungspfad und über den primären Übertragungspfad, den sekundären Übertragungspfad und den tertiären Übertragungspfad basierend auf dem ersten Datenteilungsschwellenwert und dem zweiten Datenteilungsschwellenwert Folgendes umfasst:
in Reaktion darauf, dass der Datenpuffer kleiner als der erste Datenteilungsschwellenwert ist (1005), Senden (1007) der Daten nur über den primären Pfad.

3. Verfahren nach einem der Ansprüche 1-2, wobei der zweite Datenteilungsschwellenwert größer als der erste Datenteilungsschwellenwert ist und das Senden von Daten nur über den primären Übertragungspfad, nur über den primären Übertragungspfad und den sekundären Übertragungspfad und über den primären Übertragungspfad, den sekundären Übertragungspfad und den tertiären Übertragungspfad basierend auf dem ersten Datenaufteilungsschwellenwert und dem zweiten Datenaufteilungsschwellenwert Folgendes umfasst:
in Reaktion darauf, dass der Datenpuffer größer als der erste Datenteilungsschwellenwert und kleiner als der zweite Datenteilungsschwellenwert ist, Senden (1011) der Daten nur über den primären Übertragungspfad und den sekundären Übertragungspfad.

4. Verfahren nach Anspruch 3, wobei das Verfahren ferner Folgendes umfasst:
in Reaktion darauf, dass die Daten über den primären Übertragungspfad und den sekundären Übertragungspfad gesendet werden und der Datenpuffer kleiner als der zweite Datenteilungsschwellenwert und kleiner als der erste Datenteilungsschwellenwert wird, Senden (1007) der Daten nur über den primären Übertragungspfad.

5. Verfahren nach Anspruch 1, wobei der zweite Datenteilungsschwellenwert kleiner als der erste Datenteilungsschwellenwert ist und das Senden von Daten nur über den primären Übertragungspfad, nur über den primären Übertragungspfad und den sekundären Übertragungspfad und über den primären Übertragungspfad, den sekundären Übertragungspfad und den tertiären Übertragungspfad basierend auf dem ersten Datenteilungsschwellenwert und dem zweiten Datenteilungsschwellenwert Folgendes umfasst:
in Reaktion darauf, dass der Datenpuffer kleiner als der zweite Datenteilungsschwellenwert ist, Senden (1107) der Daten nur über den primären Pfad.

6. Verfahren nach einem der Ansprüche 1 und 4-5, wobei der zweite Datenteilungsschwellenwert größer als der erste Datenteilungsschwellenwert ist und das Senden von Daten nur über den primären Übertragungspfad, nur über den primären Übertragungspfad und den sekundären Übertragungspfad und über den primären Übertragungspfad, den sekundären Übertragungspfad und den tertiären Übertragungspfad basierend auf dem ersten Datenaufteilungsschwellenwert und dem zweiten Datenaufteilungsschwellenwert Folgendes umfasst:
in Reaktion darauf, dass der Datenpuffer größer als der zweite Datenteilungsschwellenwert und kleiner als der erste Datenteilungsschwellenwert ist, Senden (1111) der Daten nur über den primären Übertragungspfad und den tertiären Übertragungspfad.

7. Verfahren nach einem der Ansprüche 1-6, wobei das Senden von Daten nur über den primären Übertragungspfad, nur über den primären Übertragungspfad und den sekundären Übertragungspfad und über den primären Übertragungspfad, den sekundären Übertragungspfad und den tertiären Übertragungspfad basierend auf dem ersten Datenaufteilungsschwellenwert und dem zweiten Datenaufteilungsschwellenwert Folgendes umfasst:
in Reaktion darauf, dass der Datenpuffer größer als der erste Datenteilungsschwellenwert und größer als der zweite Datenteilungsschwellenwert ist, Senden (1013) der Daten über den primären Übertragungspfad, den sekundären Übertragungspfad und den tertiären Übertragungspfad.

8. Verfahren nach Anspruch 7, wobei der zweite Datenteilungsschwellenwert größer als der erste Datenteilungsschwellenwert ist und das Verfahren ferner Folgendes umfasst:
in Reaktion darauf, dass die Daten über den primären Übertragungspfad, den sekundären Übertragungspfad und den tertiären Übertragungspfad gesendet werden und der Datenpuffer kleiner als der zweite Datenteilungsschwellenwert und größer als der erste Datenteilungsschwellenwert wird, Senden (1011) der Daten nur über den primären Übertragungspfad und den sekundären Übertragungspfad.

9. Verfahren nach Anspruch 7, wobei der zweite Datenteilungsschwellenwert kleiner als der erste Datenteilungsschwellenwert ist und das Verfahren ferner Folgendes umfasst:
in Reaktion darauf, dass die Daten über den primären Übertragungspfad, den sekundären Übertragungspfad und den tertiären Übertragungspfad gesendet werden und der Datenpuffer kleiner als der zweite Datenteilungsschwellenwert und kleiner als der erste Datenteilungsschwellenwert wird, Senden (1111) der Daten nur über den primären Übertragungspfad und den tertiären Übertragungspfad.

10. Verfahren nach einem der Ansprüche 1-4 und 7-8, wobei die Konfiguration ferner einen ersten Datenteilungshysteresewert, der mit dem ersten Datenteilungsschwellenwert assoziiert ist, und einen zweiten Datenteilungshysteresewert aufweist, der mit dem zweiten Datenteilungsschwellenwert assoziiert ist, und der zweite Datenteilungsschwellenwert höher als der erste Datenteilungsschwellenwert ist, wobei das Verfahren ferner Folgendes umfasst:
in Reaktion auf das Senden von Daten nur über den primären Übertragungspfad und den sekundären Übertragungspfad Bestimmen (1215), ob der Datenpuffer unter den ersten Datenteilungsschwellenwert minus des ersten Datenteilungshysteresewerts gefallen ist; und
in Reaktion auf ein Bestimmen, dass der Datenpuffer unter den ersten Datenteilungsschwellenwert minus des ersten Datenteilungshysteresewerts gefallen ist, Senden (1007) von Daten nur über den primären Übertragungspfad.

11. Verfahren nach Anspruch 10, ferner umfassend:
in Reaktion auf ein Bestimmen, dass der Datenpuffer nicht unter den ersten Datenteilungsschwellenwert minus des ersten Datenteilungshysteresewerts gefallen ist, Senden (1011) von Daten nur über den primären Übertragungspfad und den sekundären Übertragungspfad.

12. Verfahren nach einem der Ansprüche 10-11, ferner umfassend:
in Reaktion auf das Senden von Daten über den primären Übertragungspfad, den sekundären Übertragungspfad und den tertiären Übertragungspfad Bestimmen (1217), ob der Datenpuffer unter den zweiten Datenteilungsschwellenwert minus des zweiten Datenteilungshysteresewerts gefallen ist; und
in Reaktion auf ein Bestimmen, dass der Datenpuffer unter den zweiten Datenteilungsschwellenwert minus des zweiten Datenteilungshysteresewerts gefallen ist, aber über dem ersten Datenteilungsschwellenwert ist, Senden (1011) von Daten nur über den primären Übertragungspfad und den sekundären Übertragungspfad.

13. Verfahren nach Anspruch 12, ferner umfassend:
in Reaktion auf ein Bestimmen, dass der Datenpuffer nicht unter den zweiten Datenteilungsschwellenwert minus des zweiten Datenteilungshysteresewerts gefallen ist, Senden (1013) von Daten über den primären Übertragungspfad, den sekundären Übertragungspfad und den tertiären Übertragungspfad.

14. Verfahren nach einem der Ansprüche 1 und 5-8, wobei die Konfiguration ferner einen ersten Datenteilungshysteresewert, der mit dem ersten Datenteilungsschwellenwert assoziiert ist, und einen zweiten Datenteilungshysteresewert aufweist, der mit dem zweiten Datenteilungsschwellenwert assoziiert ist, und der zweite Datenteilungsschwellenwert kleiner als der erste Datenteilungsschwellenwert ist, wobei das Verfahren ferner Folgendes umfasst:
in Reaktion auf das Senden von Daten nur über den primären Übertragungspfad und den tertiären Übertragungspfad Bestimmen (1315), ob der Datenpuffer unter den zweiten Datenteilungsschwellenwert minus des zweiten Datenteilungshysteresewerts gefallen ist; und
in Reaktion auf ein Bestimmen, dass der Datenpuffer unter den zweiten Datenteilungsschwellenwert minus des zweiten Datenteilungshysteresewerts gefallen ist, Senden (1007) von Daten nur über den primären Übertragungspfad.

15. Verfahren nach Anspruch 14, ferner umfassend:
in Reaktion auf ein Bestimmen, dass der Datenpuffer nicht unter den zweiten Datenteilungsschwellenwert minus des zweiten Datenteilungshysteresewerts gefallen ist, Senden (1111) von Daten nur über den primären Übertragungspfad und den tertiären Übertragungspfad.

16. Verfahren nach einem der Ansprüche 14-15, ferner umfassend:
in Reaktion auf das Senden von Daten über den primären Übertragungspfad, den sekundären Übertragungspfad und den tertiären Übertragungspfad Bestimmen (1317), ob der Datenpuffer unter den ersten Datenteilungsschwellenwert minus des zweiten Datenteilungshysteresewerts gefallen ist, aber über dem zweiten Datenteilungsschwellenwert ist; und
in Reaktion auf ein Bestimmen, dass der Datenpuffer unter den ersten Datenteilungsschwellenwert minus des ersten Datenteilungshysteresewerts gefallen ist, aber über dem zweiten Datenteilungsschwellenwert ist, Senden (1111) von Daten nur über den primären Übertragungspfad und den tertiären Übertragungspfad.

17. Verfahren nach Anspruch 16, ferner umfassend:
in Reaktion auf ein Bestimmen, dass der Datenpuffer nicht unter den ersten Datenteilungsschwellenwert minus des ersten Datenteilungshysteresewerts gefallen ist, Senden (1013) von Daten über den primären Übertragungspfad, den sekundären Übertragungspfad und den tertiären Übertragungspfad.

18. Drahtlose Kommunikationsvorrichtung (1500), die zum Durchführen des Verfahrens nach einem der Ansprüche 1-17 ausgelegt ist.

## Revendications

1. Procédé réalisé par un dispositif de communication sans fil (1500) présentant un tampon de données et connecté à trois nœuds de réseau dans un système de communication radio, le procédé comprenant :
la connexion (1001) à trois groupes de cellules différents où le dispositif de communication sans fil est configuré pour utiliser un trajet de transmission primaire dans un premier groupe de cellules parmi les trois groupes de cellules différents, un trajet de transmission secondaire dans un deuxième groupe de cellules parmi les trois groupes de cellules différents, et un trajet de transmission tertiaire dans un troisième groupe de cellules parmi les trois groupes de cellules différents ;
la réception (1003) d'une configuration présentant une première valeur seuil de séparation de données et une deuxième valeur seuil de séparation de données pour modifier un trajet de transmission de données ; et
la transmission de données via uniquement le trajet de transmission primaire (1007), via uniquement le trajet de transmission primaire et le trajet de transmission secondaire (1011) et via le trajet de transmission primaire, le trajet de transmission secondaire et le trajet de transmission tertiaire (1013) sur la base de la première valeur seuil de séparation de données et de la deuxième valeur seuil de séparation de données.

2. Procédé selon la revendication 1, dans lequel la deuxième valeur seuil de séparation de données est supérieure à la première valeur seuil de séparation de données et la transmission de données via uniquement le trajet de transmission primaire, via uniquement le trajet de transmission primaire et le trajet de transmission secondaire et via le trajet de transmission primaire, le trajet de transmission secondaire et le trajet de transmission tertiaire sur la base de la première valeur seuil de séparation de données et de la deuxième valeur seuil de séparation de données comprend :
en réponse au fait que le tampon de données est inférieur à la première valeur seuil de séparation de données (1005), la transmission (1007) des données via uniquement le trajet de transmission primaire.

3. Procédé selon l'une quelconque des revendications 1 et 2, dans lequel la deuxième valeur seuil de séparation de données est supérieure à la première valeur seuil de séparation de données et la transmission de données via uniquement le trajet de transmission primaire, via uniquement le trajet de transmission primaire et le trajet de transmission secondaire et via le trajet de transmission primaire, le trajet de transmission secondaire et le trajet de transmission tertiaire sur la base de la première valeur seuil de séparation de données et de la deuxième valeur seuil de séparation de données comprend :
en réponse au fait que le tampon de données est supérieur à la première valeur seuil de séparation de données et inférieur à la deuxième valeur seuil de séparation de données, la transmission (1011) des données via uniquement le trajet de transmission primaire et le trajet de transmission secondaire.

4. Procédé selon la revendication 3, le procédé comprenant en outre :
en réponse à la transmission des données via le trajet de transmission primaire et le trajet de transmission secondaire et le tampon de données devenant inférieur à la deuxième valeur seuil de séparation de données et inférieur à la première valeur seuil de séparation de données, la transmission (1007) des données via uniquement le trajet de transmission primaire.

5. Procédé selon la revendication 1, dans lequel la deuxième valeur seuil de séparation de données est inférieure à la première valeur seuil de séparation de données et la transmission de données via uniquement le trajet de transmission primaire, via uniquement le trajet de transmission primaire et le trajet de transmission secondaire et via le trajet de transmission primaire, le trajet de transmission secondaire et le trajet de transmission tertiaire sur la base de la première valeur seuil de séparation de données et de la deuxième valeur seuil de séparation de données comprend :
en réponse au fait que le tampon de données est inférieur à la deuxième valeur seuil de séparation de données, la transmission (1107) des données via uniquement le trajet de transmission primaire.

6. Procédé selon l'une quelconque des revendications 1, 4 et 5, dans lequel la deuxième valeur seuil de séparation de données est inférieure à la première valeur seuil de séparation de données et la transmission de données via uniquement le trajet de transmission primaire, via uniquement le trajet de transmission primaire et le trajet de transmission secondaire et via le trajet de transmission primaire, le trajet de transmission secondaire et le trajet de transmission tertiaire sur la base de la première valeur seuil de séparation de données et de la deuxième valeur seuil de séparation de données comprend :
en réponse au fait que le tampon de données est supérieur à la deuxième valeur seuil de séparation de données et inférieur à la première valeur seuil de séparation de données, la transmission (1111) des données via uniquement le trajet de transmission primaire et le trajet de transmission tertiaire.

7. Procédé selon l'une quelconque des revendications 1 à 6, dans lequel la transmission de données via uniquement le trajet de transmission primaire, via uniquement le trajet de transmission primaire et le trajet de transmission secondaire et via le trajet de transmission primaire, le trajet de transmission secondaire et le trajet de transmission tertiaire sur la base de la première valeur seuil de séparation de données et de la deuxième valeur seuil de séparation de données comprend :
en réponse au fait que le tampon de données est supérieur à la première valeur seuil de séparation de données et supérieur à la deuxième valeur seuil de séparation de données, la transmission (1013) des données via le trajet de transmission primaire, le trajet de transmission secondaire et le trajet de transmission tertiaire.

8. Procédé selon la revendication 7, dans lequel la deuxième valeur seuil de séparation de données est supérieure à la première valeur seuil de séparation de données, le procédé comprenant en outre :
en réponse à la transmission des données via le trajet de transmission primaire, le trajet de transmission secondaire et le trajet de transmission tertiaire et le tampon de données devenant inférieur à la deuxième valeur seuil de séparation de données et supérieur à la première valeur seuil de séparation de données,
la transmission (1011) des données via uniquement le trajet de transmission primaire et le trajet de transmission secondaire.

9. Procédé selon la revendication 7, dans lequel la deuxième valeur seuil de séparation de données est inférieure à la première valeur seuil de séparation de données, le procédé comprenant en outre :
en réponse à la transmission des données via le trajet de transmission primaire, le trajet de transmission secondaire et le trajet de transmission tertiaire et le tampon de données devenant supérieur à la deuxième valeur seuil de séparation de données et inférieur à la première valeur seuil de séparation de données,
la transmission (1111) des données via uniquement le trajet de transmission primaire et le trajet de transmission tertiaire.

10. Procédé selon l'une quelconque des revendications 1 à 4 et 7 à 8, dans lequel la configuration présente en outre une première valeur d'hystérésis de séparation de données associée à la première valeur seuil de séparation de données et une deuxième valeur d'hystérésis de séparation de données associée à la deuxième valeur seuil de séparation de données et la deuxième valeur seuil de séparation de données est supérieure à la première valeur seuil de séparation de données, le procédé comprenant en outre :
en réponse à la transmission de données uniquement via le trajet de transmission primaire et le trajet de transmission secondaire, la détermination (1215) si le tampon de données est devenu inférieur à la première valeur seuil de séparation de données moins la première valeur d'hystérésis de séparation de données ; et
en réponse à la détermination que le tampon de données est devenu inférieur à la première valeur seuil de séparation de données moins la première valeur d'hystérésis de séparation de données, la transmission (1007) de données uniquement via le trajet de transmission primaire.

11. Procédé selon la revendication 10, comprenant en outre :
en réponse à la détermination que le tampon de données n'est pas devenu inférieur à la première valeur seuil de séparation de données moins la première valeur d'hystérésis de séparation de données, la transmission (1011) de données uniquement via le trajet de transmission primaire et le trajet de transmission secondaire.

12. Procédé selon l'une quelconque des revendications 10 et 11, comprenant en outre :
en réponse à la transmission de données via le trajet de transmission primaire, le trajet de transmission secondaire et le trajet de transmission tertiaire, la détermination (1217) si le tampon de données est devenu inférieur à la deuxième valeur seuil de séparation de données moins la deuxième valeur d'hystérésis de séparation de données ; et
en réponse à la détermination que le tampon de données est devenu inférieur à la deuxième valeur seuil de séparation de données moins la deuxième valeur d'hystérésis de séparation de données mais est supérieur à la première valeur seuil de séparation de données, la transmission (1011) de données uniquement via le trajet de transmission primaire et le trajet de transmission secondaire.

13. Procédé selon la revendication 12, comprenant en outre :
en réponse à la détermination que le tampon de données n'est pas devenu inférieur à la deuxième valeur seuil de séparation de données moins la deuxième valeur d'hystérésis de séparation de données, la transmission (1013) de données via le trajet de transmission primaire, le trajet de transmission secondaire et le trajet de transmission tertiaire.

14. Procédé selon l'une quelconque des revendications 1 et 5 à 8, dans lequel la configuration présente en outre une première valeur d'hystérésis de séparation de données associée à la première valeur seuil de séparation de données et une deuxième valeur d'hystérésis de séparation de données associée à la deuxième valeur seuil de séparation de données et la deuxième valeur seuil de séparation de données est inférieure à la première valeur seuil de séparation de données, le procédé comprenant en outre :
en réponse à la transmission de données uniquement via le trajet de transmission primaire et le trajet de transmission tertiaire, la détermination (1315) si le tampon de données est devenu inférieur à la deuxième valeur seuil de séparation de données moins la deuxième valeur d'hystérésis de séparation de données ; et
en réponse à la détermination que le tampon de données est devenu inférieur à la deuxième valeur seuil de séparation de données moins la deuxième valeur d'hystérésis de séparation de données, la transmission (1007) de données uniquement via le trajet de transmission primaire.

15. Procédé selon la revendication 14, comprenant en outre :
en réponse à la détermination que le tampon de données n'est pas devenu inférieur à la deuxième valeur seuil de séparation de données moins la deuxième valeur d'hystérésis de séparation de données, la transmission (1111) de données uniquement via le trajet de transmission primaire et le trajet de transmission tertiaire.

16. Procédé selon l'une quelconque des revendications 14 et 15, comprenant en outre :
en réponse à la transmission de données via le trajet de transmission primaire, le trajet de transmission secondaire et le trajet de transmission tertiaire, la détermination (1317) si le tampon de données est devenu inférieur à la première valeur seuil de séparation de données moins la première valeur d'hystérésis de séparation de données mais est supérieur à la deuxième valeur seuil de séparation de données ; et
en réponse à la détermination que le tampon de données est devenu inférieur à la première valeur seuil de séparation de données moins la première valeur d'hystérésis de séparation de données mais est supérieur à la deuxième valeur seuil de séparation de données, la transmission (1111) de données uniquement via le trajet de transmission primaire et le trajet de transmission tertiaire.

17. Procédé selon la revendication 16, comprenant en outre :
en réponse à la détermination que le tampon de données n'est pas devenu inférieur à la première valeur seuil de séparation de données moins la première valeur d'hystérésis de séparation de données, la transmission (1013) de données via le trajet de transmission primaire, le trajet de transmission secondaire et le trajet de transmission tertiaire.

18. Dispositif de communication sans fil (1500) adapté pour réaliser le procédé selon l'une quelconque des revendications 1 à 17.
